# EUROPÄISCHE PATENTSCHRIFT

(11) **EP 2 511 205 B1**
(45) Veröffentlichungstag und Bekanntmachung des Hinweises auf die Patenterteilung: **12.09.2018**
(21) Anmeldenummer: 12156689.7
(22) Anmeldetag: 23.02.2012
(51) Int. Cl.: B65G 47/84, B29C 49/42, B67C 3/24, B67C 7/00

(54) **Behälterbehandlungsmaschine und Verfahren zur Behälterbehandlung**
Container handling machine and method for container handling
Machine de traitement de récipient et procédé de traitement de récipient

(30) Priorität: 13.04.2011 DE 102011007280
(43) Veröffentlichungstag der Anmeldung: 17.10.2012
(73) Patentinhaber: Krones AG, 93073 Neutraubling (DE)
(72) Erfinder: Winzinger, Frank, 85354 Freising (DE)
(74) Vertreter: Grünecker Patent- und Rechtsanwälte PartG mbB

(56) Entgegenhaltungen:
- EP-A1- 0 721 808
- EP-A1- 2 295 324
- EP-A2- 0 858 963
- WO-A1-98/22374
- WO-A2-2010/020529
- AT-B- 412 622
- DE-A1- 19 654 350
- DE-A1- 19 956 186
- DE-A1-102005 041 929
- US-A- 4 968 081
- US-A- 6 076 875

## Beschreibung

Die Erfindung betrifft eine Rundlauf-Behälterbehandlungsmaschine gemäß dem Anspruch 1, sowie Verfahren gemäß den Ansprüchen 16 bis 18. Dabei umfasst die Erfindung als Rundlauf-Behälterbehandlungsmaschine insbesondere eine Streckblasmaschine, eine Preform-Transportstrecke, einen Füller, Etikettierer, Sterilisierer, Rinser oder Transportpuffer.

US 5 253 911 A offenbart einen gesteuerten Greifer, an dessen Halterung zweier Greiferklauen ein elektrischer Servomotor angebracht ist, der über einen Drehnocken die Greiferklauen symmetrisch in Schließrichtung gegen die Kraft einer Öffnungsfeder schwenkt. Die Greiferklauen bewegen sich gegensinnig nicht nur symmetrisch, sondern nehmen in der Greifposition und der Freigabeposition zwangsweise exakt vorbestimmte Relativpositionen an der Halterung ein. Diese Relativpositionen bestimmen die Position des ergriffenen Objekts und die Übernahme- und Abgabepunkte ganz exakt in Bezug zur Halterung. Diese Relativpositionen sind unveränderbar.
Bei aus DE 102005041929 A1 bekannten Greifern für Behälterbehandlungsmaschinen wird die Greifkraft in der Greifstellung des Greifers durch kooperierende Permanentmagneten erzeugt. Da die um separate Schwenkachsen schwenkbaren Greiferklauen durchkemmende Zahnsegmente jeweils gegensinnig zwangsgekoppelt sind, führt jede Greiferklaue eine vorbestimmte Relativbewegung gegenüber jeder anderen Greiferklaue aus, wobei individuelle separate Verschwenkungen der Greiferklauen nicht möglich sind.
Bei einer aus DE 19654350 A1 bekannten Rundlauf-Behälterbehandlungsmaschine sind Greifer mit zwei um eine gemeinsame Schwenkachse schwenkbaren Greiferklauen vorgesehen. Die Greiferklauen werden symmetrisch zu einer Mittelachse des Greifers auseinander oder zueinander geschwenkt. Eine individuelle separate Schwenkbarkeit einer Greiferklaue relativ zur anderen ist nicht möglich.
Bei einer aus EP 2295324 A1 bekannten Rundlaufbehälterbehandlungsmaschine sind ungesteuerte, zur Greifstellung federbelastete Greifer mit schwenkbaren Greifklauen vorgesehen, die durch durch das Einbringen beispielsweise eines Behälterhalses oder durch Herausziehen des Behälterhalses auseinandergespreizt werden. Bei einer Sterilisation des Behälters wird dessen Mündung in einer einzigen festgelegten Relativposition gegenüber einer Einlassdüse gehalten. Die Greiferklauen weisen entsprechende Abrundungen oder Rampen auf, um durch das Einbringen oder Herausziehen der Behältermündung betätigt zu werden.

AT 412622 B betrifft eine Greifzangenanordnung für Roboter zum Manipulieren beispielsweise von Betonbauteilen. Die vier zwischen einer Greifstellung und einer Lösestellung verlagerbaren Greifbacken werden über individuelle elektrische Antriebsmotoren ausschließlich linear und parallel zu sich selbst bewegt.

In einer Komponenten-Positionierungs-Maschine gemäß US-6076875 A werden elektrisch gesteuerte Greifer eingesetzt, deren Greiferklauen linear und parallel zueinander individuell verschiebbar sind.

Von elektrischen Servomotoren betätigte Greiferklauen gesteuerter Greifer bieten den Vorteil einer feinfühligen Regelung und den Entfall mechanisch aufwendiger, auf Schmierung angewiesener, deshalb unhygienischer und platzraubender Kurvenbahnsteuerungen, wie sie in Behälterbehandlungsmaschinen seit Jahrzehnten Standard für gesteuerte Greifer geworden sind.

WO 2009/144664 A offenbart einen ungesteuerten Greifer, dessen Greiferklauen durch mechanische oder magnetische Kraftspeicher zum Beispiel in Schließrichtung symmetrisch beaufschlagt sind und vom Preform oder Behälter bei der Übernahme oder Abgabe in Öffnungsrichtung auseinandergezwungen werden. Solche ungesteuerten mechanischen Greifer erzeugen in der Greifposition hohe Schließkräfte, die zum Beispiel am erwärmten Preforms Deformationen oder bei der Übernahme oder Abgabe von Behältern unerwünschte Reibungskräfte erzeugen können. Ein an einem die Halterung des Greifers tragenden Arm angreifender elektrischer Servomotor schwenkt den Greifer relativ zum Drehzentrum eines die Transportstrecke definierenden Sterns, beispielsweise um einen Teilungsverzug zu kompensieren bzw. die relativen Abstände zwischen aufeinanderfolgenden Preforms oder Behältern zu verändern. Der Servomotor nimmt keinen Einfluss auf die Greiferklauen-Bewegungen.

Unter anderem ist es Aufgabe des Greifers in einer Behälterbehandlungsmaschine oder in einer Transportstrecke zwischen Behälterbehandlungsmaschinen in einer Behälterbehandlungsanlage, den Preform oder Behälter zu transportieren, aus einer Transportstrecke oder Station einer Behälterbehandlungsmaschine an exakt vorherbestimmter Position zu übernehmen und an exakt vorbestimmter Position an eine andere Transportstrecke oder Station einer Behälterbehandlungsmaschine abzugeben. Dabei sind gesteuerte oder ungesteuerte Greifer mit zwei oder mehr als zwei Greiferklauen üblich. Gesteuerte Greifer werden in Öffnungs- und/oder Schließrichtung betätigt, während ungesteuerte Greifer eine mechanisch definierte Greifposition haben, zu der die Greiferklauen beispielsweise durch einen Kraftspeicher wie eine Feder oder durch Magneten vorgespannt werden. Bei der Übernahme bzw. Abgabe werden die Greiferklauen eines ungesteuerten durch Kräfte bei Greifern einer Relativbewegung des Preforms oder Behälters gegen die Kraft des Kraftspeichers geöffnet, wonach sie durch den Kraftspeicher wieder zueinander bewegt werden.

In Verfahrensabläufen in Behälterbehandlungsanlagen oder Rundlauf-Behälterbehandlungsmaschinen zeigen sich jedoch in der Praxis unterschiedliche Probleme, die unter anderem aus dem Funktionsprinzip der Greifer, Verschleiß, Fertigungstoleranzen und einer Anfälligkeit der behandelten Preforms oder Behälter auf mechanische, von den Greifern generierte Belastungen resultieren.

Beispielsweise begleitet der Greifer bei der Übergabe eines Preforms in die Blasform einer Blasstation die Blasform auf einem Teil ihres zum Beispiel kreisförmigen Weges um die Maschinenachse. Bei hohen Maschinenleistungen beispielsweise eines Rundläufers (bis 72000 Behälter/h) folgt der Greifer mittels einer überlagerten Schwenk- und Linearbewegung eines gesteuerten Übergabearms der Blasform unter Ausrichtung des Zentrums des Preforms auf das Zentrum der Blasform, bis die Blasform geschlossen ist. Aus einem ungesteuerten Greifer zieht die geschlossene Blasform, in der der Preform festsitzt, den Preform aus dem Greifer. Dieses Abziehen resultiert jedoch in einer wackelnden Verlagerung des Preforms in der Blasform. Diese Störung lässt sich durch Verwenden eines gesteuerten Greifers (aktives Öffnen, federbelastetes Schließen) vermindern. Dennoch tritt häufig eine Schwingbewegung des Preforms auf, durch die der Preform nicht mehr exakt genug relativ zu den Blasformhälften positioniert ist. Der Preform wird dann von einer der Hälften der sich schließenden Blasform zuerst berührt und verlagert. Dieser nachteilige Effekt wird durch den geringen Unterschied des Durchmessers im Haltebereich der Blasform im Vergleich zum Durchmesser des Preforms sogar verstärkt. Aufgrund einer Verlagerung des Preforms in der Blasform bei einer solchen unharmonischen Abgabe aus dem Greifer trifft die in die Blasform eingeschobene Reckstange nicht mehr eigentlich vorbestimmt das Zentrum der Preform-Bodenkuppe. Es kommt zu einem sogenannten Off-Center-Effekt, bei dem der üblicherweise im Zentrum des Behälterbodens liegende Anspritzpunkt oder Druckpunkt des Preforms nach außen zu Behälterfüßen verlagert wird. Dies resultiert in einem instabilen Behälterboden, da an einer Seite die Wandstärke dicker ist als auf der Seite des Flaschenbodens, auf der die Reckstange den Preform außermittig kontaktiert hatte. Der Abgabepunkt wird vom Bedienpersonal über Einstellmöglichkeiten an dem Greifer, am Stern oder an der Blasform während der Einrüstung möglichst genau eingestellt. Jedoch kommt es immer wieder vor, dass die Wartungsintervalle für ein präzises Nachkalibrieren nicht eingehalten werden. Eine solche Nachkalibrierung wird gegebenenfalls auch notwendig, wenn die Maschinenleistung gesteigert oder verringert wird, weil sich damit ebenfalls eine Verlagerung des beim Einrüsten eingestellten Abgabepunktes ergeben kann.

Beim Preferential Heating von Preforms wird jeder Preform an einem Aufnahmedorn bzw. Innengreifer nach einer in Umfangsrichtung gleichmäßigen Wärmebehandlung in einen Zwischenmodul eingeführt, in welchem diskrete Bereiche, z.B. der Seitenwandung, von mindestens zwei z. B. schalenartigen Kontaktelementen berührt werden, um ein in Umfangsrichtung variierendes Temperaturprofil aufzubringen (z.B. durch Wärmeentzug), ehe der Preform geblasen wird. Dies ist beispielsweise zur Herstellung eines unrunden oder ovalen Behälters zweckmäßig, der sowohl in in Umfangsrichtung stärker verstreckten Bereichen als auch in Umfangsrichtung weniger verstreckten Bereichen gleiche und/oder unterschiedliche Wandstärken erhalten soll. Verfahrensbedingt tritt eine Quetschung des Preforms durch die Kontaktelemente ein, deren Stärke bisher nicht einstellbar ist, weil die dann als Greiferklauen eines multifunktionalen (z.B. Transportfunktion, Positionierungsfunktion, Quetschfunktion, Temperierungsfunktion) Greifers fungierenden Kontaktelements z. B. über Kurvensteuerungen den Preform stets auf gleiche Weise ergreifen. Bei einem Sortenwechsel müssen bisher zumindest die Kontaktelemente zeitaufwändig gewechselt werden.

Ferner erfordern unterschiedlich große Preform- oder Behältersorten unterschiedliche Greifkräfte bei der Übernahme, der Abgabe und während des Transports, wobei herkömmliche Greifer eine Kraftsteuerung oder Wegsteuerung der Greiferklauen bisher nicht ermöglichen.

In einer Blasstation einer Streckblasmaschine tritt manchmal ein Versagen des Reckstangenantriebs auf, so dass die Reckstange nach einem Blasformvorgang nicht ordnungsgemäß aus der Blasform gezogen ist, wenn ein neuer Preform zur leeren Blasform gelangt. Da herkömmliche Greifer mit einem zwangsweisen und unveränderlichen Bewegungsablauf arbeiten, kann bei einem Versagen des Reckstangenantriebs der Gefahrensituation nicht Rechnung getragen werden, so dass es zu einer Kollision zwischen dem vom Greifer gehaltenen Preform und der Reckstange kommt, die in einer Betriebsstörung resultiert. Das gilt auch bei anderen versagensbedingten Fehlstellungen von Teilen einer Blasstation, wie der Blasdüse, der Formverriegelung, oder dgl..

In einer Rundlauf-Behälterbehandlungsmaschine werden benachbarte Rundläufersektionen wie zum Beispiel ein Blasrad und ein Preform-Übergabestern mit einem Getriebezug aufeinander abgestimmt, und zwar für eine bestimmte Maschinenleistung. Bei der Einrüstung wird beispielsweise bewusst ein Versatz um bis zu 0,3 mm zwischen dem Abgabepunkt des Greifers und dem Zentrum der Blasform eingestellt. Bei der bestimmten Maschinenleistung beispielsweise von 2000 Behälter/h kompensiert die Betriebsbelastung bei Normalbetrieb dann den Versatz in dem Getriebezug, beispielsweise einer Riemenverbindung, auf Null, so dass die Preforms bei der Abgabe exakt auf das Zentrum der Blasform ausgerichtet sind. Wird jedoch die Behälterbehandlungsmaschine bei niedrigerer Maschinenleistung beispielsweise unter 1000 Behälter/h betrieben, ist die betriebsbedingte Belastung im Getriebezug geringer, so dass der eingestellte Versatz dann gegebenenfalls nicht mehr kompensiert wird und Preform-Abgabeprobleme entstehen, falls zeitaufwändig nicht eine vorhergehende entsprechende Änderung des Versatzes zeitaufwendig vorgenommen wird. Die Greifer sind bisher nicht in der Lage, diesen Nachteil ohne vorherige Kalibrierarbeiten auszugleichen.

Greifer eines Transportsterns, die Preforms von Aufnahmedornen oder Innengreifern übernehmen, und vom Ofen zur Blasmaschine transportieren, arbeiten mit vorbestimmter Greifkraft, obwohl schwere oder leichte Preformsorten unterschiedliche Haltekräfte benötigten, da beispielsweise schwere Preforms wegen der Fliehkraft fester positioniert sein müssen, als leichtere Preforms, die naturgemäß auch ein instabileres Mundstück bzw. ein leicht erwärmtes und deshalb verformbares Gewinde aufweisen. Bei einem Preform-Sortenwechsel müsste deshalb die Greifkraft entsprechend angepasst werden, was zeitaufwändig und in vielen Fällen nicht möglich ist, da die Greifbewegung nicht kraftgesteuert und/oder weggesteuert werden kann.

Bei einer Temperierung eines Preforms im Ofen wird dieser mit einem Innengreifer oder Aufnahmedorn gehalten, von welchem der Preform vom Greifer des eine Transportstrecke bildenden Transportsterns, der ihn zur Blasmaschine transportiert, aufgrund der Geometrie bei den Relativbewegungen zwischen dem Aufnahmedorn und dem Transportstern übernommen wird. Oftmals haben Preforms am Mundstück niedrige Gewindemündungsbereiche, so dass der Aufnahmedorn relativ tief eintauchen muss. Dadurch kann er sich bei der Übernahme in der Bewegungsebene der Greiferklauen des übernehmenden Greifers befinden. Wird nun aufgrund einer Störung gar kein Preform vom Aufnahmedorn geliefert, oder ist ein fehlerhafter Preform zuvor ausgeschieden worden, oder wird die Maschine im Modus "belegen nur jeder zweiten Teilung" betrieben, lässt es sich bei herkömmlichen Greifern nicht vermeiden, dass die Greiferklauen eines ungesteuerten Greifers und der Aufnahmedorn kollidieren, weil kein Preform dazwischen ist. Dies kann zu Schäden am Aufnahmedorn und/oder den Greiferklauen führen.

In einem Sterilisierer positioniert der Greifer den Preform oder Behälter in Ausrichtung auf eine Einlassdüse für ein Sterilisationsmittel, das unter Druck schräg oder asymmetrisch in die Mündung eingebracht wird. Dabei kann der Greifer während des Sterilisiervorgangs den Mündungsrand des Mundstücks in positionierender Anlage z.B. an wenigstens einem die Einlassdüse haltenden Steg halten. Um auch den Mündungsrand und/oder zumindest Teile des außenliegenden Gewindes des Mundstücks mit dem Sterilisationsmittel behandeln zu können, kann oberhalb der Einlassdüse eine Umlenkglocke platziert sein, die aus dem Preform oder Behälter austretendes Sterilisationsmittel umlenkt und auf den Mündungsrand und/oder außen auf das Gewinde appliziert. Ein herkömmlicher Greifer hält den Preform oder Behälter während des gesamten Sterilisierprozesses in einer exakt vorbestimmten Position relativ zur Einlassdüse, was es erschwert, die Sterilisierwirkung zu intensivieren bzw. auch den Anlagebereich des Mündungsrandes an dem Steg und/oder die Greiferklauen-Kontaktbereiche ordnungsgemäß zu sterilisieren. Hier wäre zumindest eine individuelle Verstellbarkeit der Mündung relativ zur Einlassdüse und/oder dem wenigstens einen Steg zweckmäßig, die es bei herkömmlichen Greifern jedoch nicht gibt. Ein ähnlicher Ablauf ergibt sich in einem Rinser bei der Behandlung mit einem Rinsmittel. Insbesondere werden die Greiferklauen in einer Ebene verschwenkt, welche senkrecht zur Achse des Rins- oder Sterilisierstrahls steht. Es wäre aber auch alternativ oder zusätzlich denkbar, dass die Greifer derart verschwenkt werden, dass sich der Einspritzwinkel relativ zur Längsachse der zu behandelnden Behälter ändert. Hierfür kann auch ein zusätzlicher Antrieb vorgesehen sein. Auch wäre es denkbar, die Behälter und/oder deren Mündungen vor dem Eintritt in den Sterilisierer mit einem Sensor oder einer Kamera zu vermessen und die Greifer aufgrund der Messung derartig zu positionieren, dass der Strahl des Sterilisier- oder Rinsmediums individuell an jeden Behälter angepasst wird. Insbesondere kann ein optimaler Abstand vom Behältermündungsrand zum Strahl vorgegeben werden, entweder in Prozent vom Durchmesser der Mündung oder in Millimetern vom Rand. Bei Behältern mit größerem Mündungsdurchmesser würden die Greiferklauen nach einer mittigen Übergabe einen weiteren Verfahrweg bis zur optimalen Position zurücklegen. Alternativ könnte der Behälter auch um dieses Maß an die Greiferklauen des Rinsers oder Sterilisierers außermittig - d.h. schon mit dem optimalen Abstand zur Düse übergeben werden.

Häufig führen Greifer herkömmlicher Art etwa an Übergabearmen von Transfersternen aufgrund der üblichen Kurvenbahnsteuerungen zu Problemen beim Betrieb in einer Reinraumumgebung, da durch den Verschleiß und die erforderliche Schmierung der Kurvenbahnsteuerungen eine Kontaminierung der Reinraumatmosphäre kaum zu vermeiden ist bzw. technisch außerordentlich aufwändige Reinraumabdichtungen schwierig zu installieren sind. Hier würden Greifer, deren Bewegungen nicht auf eine Kurvenbahnsteuerung angewiesen sind, wesentlich bessere Reinraumtauglichkeit haben, gepaart mit einer individuellen Betätigbarkeit der Greiferklauen, die es bei herkömmlichen Greifern zur Zeit nicht gibt.

In manchen Behälterbehandlungsanlagen sind Puffertransportstrecken oder eine sogenannte Lufttransportvorrichtung zum Abtransport von Behältern üblich. Darin werden die Behälter durch Luftstrahlen beschleunigt und transportiert. In der Praxis können jedoch Probleme auftreten, wenn ein von einem Greifer eines Übergabesterns übergebener Behälter durch die Luftstrahlen nicht gleich ordnungsgemäß beschleunigt und wegtransportiert wird. Dann entsteht ein Behälterstau, der zu Behälterschäden führen kann und den Eingriff von Bedienpersonal erforderlich macht. Herkömmliche Greifer lösen sich bei der Übergabe vollständig von den Behältern, so dass es der Lufttransportvorrichtung allein überlassen ist, den übergebenen Behälter ordnungsgemäß zu beschleunigen und Behälter mit vorbestimmten Abständen abzutransportieren. Es kann sogar ein gestauter, übergebener Behälter von der nacheilenden Greiferklaue des symmetrisch in die Freigabeposition gestellten Greifers aufgrund der Bogenbewegung des Übergabesterns in der Führung der Lufttransportvorrichtung kurzzeitig eingeklemmt werden, weil sich die Greiferklaue nicht über die Freigabeposition hinaus verstellen lässt.

Der Erfindung liegt die Aufgabe zugrunde, eine Rundlauf-Behälterbehandlungsmaschine mit an betriebsbedingte Probleme besser angepassten Greifern sowie mit derart verbesserten Greifern durchzuführende Verfahren anzugeben, bei denen die Greifer praxisbedingten Problemen bei der Übernahme, Abgabe und beim Transport von Preforms oder Behältern individuell, universell und besser gerecht werden als bisher, und Verfahren der Behälterbehandlung so durchführen lassen, dass dank verbessert arbeitender Greifer eine höhere Qualität der Endprodukte resultiert. Diese Aufgabenstellung umfasst mehrere Unteraufgaben, und zwar etwa die Folgenden:
Im Hinblick auf höhere Qualität der Endprodukte oder Zwischenprodukte sollen die Greifer individuell einstellbare Übernahme-, Abgabe- und Transportverhältnisse ermöglichen, ein Nachkalibrieren oder eine Fehlerkompensation automatisch und ohne manuellem Personaleinsatz ermöglichen, bei betriebsbedingten Störungen oder bestimmten Betriebssituationen zur Schadensabkehr eine individuelle Betätigung zulassen, die Schließkraft oder die Schließgeschwindigkeit an unterschiedliche Preform- oder Behälter-Sorten möglichst schnell anpassen lassen, eine flexible Umstellbarkeit an unterschiedliche Garnituren ermöglichen, und auch ein bisher nicht mögliches asymmetrisches Öffnen und/oder Schließen ferngesteuert durchführen lassen.

Die gestellte Aufgabe wird mit der Rundlauf-Behälterbehandlungsmaschine gemäß Anspruch 1 und mit den Verfahren der Ansprüche 16 bis 18 gelöst.

Wenn von dem jeweiligen Greifer zumindest eine, zweckmäßig jede der zwei oder drei Greiferklauen vom an der Halterung angeordneten Antrieb in Öffnungs- und/oder Schließrichtung relativ zu einer anderen Greiferklaue des Greifers individuell und/oder separat betätigbar ist, lassen sich mit dem Greifer die oben erwähnten betriebsbedingten Probleme in Behälterbehandlungsmaschinen universell und flexibel beherrschen. Die individuelle und/oder separate Betätigung der mindestens einen Greiferklaue über den wenigstens einen Antrieb an der Halterung ermöglicht nämlich ein leichtes und rasches fernbetätigtes Reagieren auf betriebsbedingte Verfahrensunregelmäßigkeiten bei der Übernahme, der Abgabe, und während des Transports. Alternativ sind die Greiferklauen unter Aufrechthalten der Greifposition relativ zur Halterung in der gleichen Öffnungs- und/oder Schließrichtung des Greifers betätigbar. Bei schwenkend beweglichen Greiferklauen führen diese unter Aufrechthalten der Greifposition gegebenenfalls sogar unterschiedliche Bewegungshübe bzw. Schwenkbewegungen aus, um zu vermeiden, dass die Haltekraft zunimmt oder abfällt. Der Greifer lässt sich flexibel auf andere Garnituren und/oder Sorten umstellen. Die beispielsweise üblichen Außenkurven zur Greiferöffnung und/oder Übergabearmsteuerung können entfallen, so dass wegen Entfalls einer Schmierung und verschleißbedingter Kontaminationen die Reinigbarkeit verbessert bzw. eine Reinigung nicht mehr nötig ist, wodurch Wartungs- oder Reinigungszyklen selten oder gar nicht erforderlich werden. Dabei ist hervorzuheben, dass die Ansteuerung des Antriebs nicht notwendigerweise mit der Betätigung der mindestens einen Greiferklaue gleichzusetzen ist. Grundsätzlich wird durch die individuelle und/oder separate Betätigung der wenigstens eine Greiferklaue des Greifers durch den wenigstens einen Antrieb an der Halterung der Greiferklauen dem Greifer wenigstens ein weiterer Freiheitsgrad zur Behandlung, Positionierung oder Schadensabkehr im Betrieb der Rundlauf-Behälterbehandlungsmaschine verliehen, der die Qualität der Endprodukte verbessern lässt, weil der Greifer unvorhersehbare oder sich abzeichnende, betriebsbedingte Probleme aktiv zu lösen vermag, wenn die Greiferklauen nicht stets nur exakt vorherbestimmte Funktionen erfüllen, sondern mit elektrisch oder magnetisch angesteuerten Öffnungs- oder/und Schließbewegungen individuell und/oder separat betätigbar sind.

Die Greifer sind in Transportstrecken unterschiedlicher Rundlauf-Behälterbehandlungsmaschinen und/oder Behälterbehandlungsanlagen universell verwendbar, zum Beispiel in einer Preform-Spritzmaschine, die im Einstufen- oder Zweistufenprozess arbeitet, und zwar zum Beispiel an Übergabesternen in präziser Abstimmung auf die Öffnungs- und Schließbewegungen der Spritzgussform stromauf und stromab, an Übergabe- oder Transfernsternen stromab des Heizmoduls einer Blasmaschine, in Teilungsverzugssternen zur Übergabe der Preforms in Blasformen, in einem Zwischenmodul zum Durchführen eines Preferential Heating-Prozesses, in Preform- und/oder Behälter-Sterilisierern, an Blasformträgern analog beispielsweise zu WO 99/622692 A und DE 10 2005 008 685 A, in einem Rinser, einem Füller, einer Etikettiermaschine, in einem Preform-Transportstern, in anderen Transportstrecken für Preforms und/oder Behältern, in Beschichtungsmaschinen, in Laserschneidemaschinen zur PET-Dosenherstellung, als Behälter im Rumpfbereich halternde Greifer, sowohl für Kunststoffals auch Glasbehälter, in Direktdruckaggregaten und dgl..

Dabei eignen sich die Greifer für einen kontinuierlichen Transport oder einen taktweisen Transport, für rundlaufende Behälterbehandlungsmaschinen, , in Shuttlesystemen, insbesondere Magnetshuttlesystemen, in welchen jedes Shuttle mit den Greifern, beispielsweise in einer Abfüllanlage, nur eine vorbestimmte Anzahl an Behältern fördert, gegebenenfalls jeweils nur einen, für Transportstrecken im Reinraum bevorzugt unter Überdruck mit Sterilluft, wobei die Begrenzungswände des Reinraums und dort angeordnete Maschinenkomponenten reinigbar sind (CIP) und Ähnlichem.

Der Greifer kann ein ungesteuerter oder gesteuerter Greifer sein kann, wobei ein ungesteuerter Greifer durch die individuelle und/oder separate Betätigung der zumindest einen Greiferklaue zu einem zumindest zeitweise gesteuerten Greifer wird. Bei einem gesteuerten Greifer kann die individuelle und/oder separate Betätigbarkeit der zumindest einen Greiferklaue der zum Beispiel normalen Öffnungsbewegung überlagerbar sein, oder zur grundsätzlichen Greifersteuerung eingesetzt werden.

Ein Verfahren zum Übergeben eines Preforms in eine geteilte Blasform einer Blasstation ist gekennzeichnet dadurch, dass bei noch geöffneter Blasform vor der Übergabe die Relativposition zwischen dem Blasformzentrum oder dem Blasformhälften und dem Zentrum des in Greifposition des Greifers gehaltenen Preforms über wenigstens einen Erkennungssensor ermittelt und hinsichtlich einer Abweichung (zum Beispiel einem Versatz) zumindest in oder gegen die gemeinsame Transportrichtung des Greifers und der Blasform ausgewertet wird, und bei Feststellen einer Abweichung zumindest die Greiferklauen gemeinsam unter Aufrechthalten der Greifposition relativ zur Halterung der Greiferklauen bis zur zumindest weitgehenden Kompensation der Abweichung betätigt werden, ehe die Abgabe des Preforms mit Schließen der Blasform vollzogen wird. Auf diese Weise werden durch die steuerbare Funktion des Greifers betriebsbedingte Probleme wie ein Wackeln oder Verlagern des Preforms relativ zur Blasform mit den nachteiligen Auswirkungen auf die Qualität des geblasenen Behälters vermieden.

Bei einem Verfahren zum Sterilisieren oder Rinsen eines Preforms oder Behälters wird beim Sterilisieren während eines Sterilisierzyklus zur Intensivierung der Sterilisierwirkung des Sterilisier- oder Rinsmittels durch individuelles Betätigen der Greiferklauen über den wenigstens einen elektrischen oder magnetischen Antrieb unter Beibehalt der Greifposition die Position des Mundstücks relativ zur Einlassdüse und quer zur Austrittsrichtung des Sterilisier- oder Rinsmittels aus der Einlassdüse verändert, so dass nicht nur die Steril- oder Rinsqualität verbessert, sondern auch mit weniger Mittel ausgekommen wird. Vorzugsweise wird die Position des Mundstücks mehrfach verändert, unter Nutzen der Zeitdauer des Zyklus. Falls ein Anlagesteg vorgesehen sein sollte, an welchem der Greifer den Mundstücköffnungsrand relativ zur Einlassdüse positioniert, wird durch die Veränderung der Position des Mundstücks auch der vom Anlagesteg abgedeckte Bereich des Mundstücköffnungsrands ordnungsgemäß sterilisiert oder gerinst, was zur Endqualität des Preforms bzw. Behälters beiträgt. Falls ein zusätzliches Halteelement für den Behälter vorgesehen wird, können die Greiferklauen vorübergehend gelockert werden, um auch die Greiferklauen-Kontaktbereiche am Behälter ordnungsgemäß zu sterilisieren. Dies kann auch zweckmäßig sein, wenn eine Umlenkglocke für austretendes Mittel vorgesehen ist, die durch die bewusst vorgenommene Änderung der Position des Mundstücks mittels des Greifers das Mittel intensiv auf alle Bereiche des Gewindes außen am Mundstück lenkt. Um die Abdeck-Wirkung des Anlagestegs zu mindern, könnte im Übrigen der Stegrücken strukturiert, verrippt, oder genoppt sein, um dem Mittel den Eintritt zu erleichtern.

Bei einem weiteren Verfahren zur Übernahme eines Preforms von einem Aufnahmedorn, insbesondere einer Wärmebehandlungsstrecke, werden die Greiferklauen des, vorzugsweise, vom Preform zu öffnenden, ungesteuerten Greifers vor der Übernahme des Preforms vom Aufnahmedorn über wenigstens einen an der Halterung angeordneten elektrischen oder magnetischen Antrieb, vorzugsweise einem regelbaren Servomotor, durch routinemäßiges (in der Steuerung programmiertes) oder bedarfsweises (durch Benutzen eines Sensors, der die Situation am Aufnahmedorn ermittelt und auswertet) Ansteuern des Antriebs individuell betätigt. Diese Sicherheitsfunktion des Greifers wäre an sich für den normalen Betriebsablauf unnötig, dient jedoch der präventiven Schadensabkehr für den Fall, dass der Aufnahmedorn keinen Preform liefert, was unterschiedliche, entweder betriebsbedingte und gegebenenfalls nicht voraussehbare Gründe haben kann. Falls ein Erkennungssensor feststellt, dass der Aufnahmedorn keinen Preform liefert, können die Greiferklauen individuell so betätigt werden, dass sie entweder in der Freigabeposition gehalten werden, oder aus der durch einen Kraftspeicher eingestellten Greifposition zum Öffnen durch den Preform gezielt in die Freigabeposition gebracht werden. Dies kann von der Steuerung des Antriebs der Greiferklauen auch ohne Zuhilfenahme eines Erkennungssensors durchgeführt werden, beispielsweise falls die Steuerung darüber informiert ist, dass kein Preform geliefert wird, oder in einer Station der Maschine ein leerer Aufnahmedorn festgestellt oder bewusst erzeugt wurde, was der Steuerung mitgeteilt wird. Beispielsweise könnte die Eingangssperre für Preforms zur Einfahrt in die Ofenstrecke geschlossen sein, so dass dann keine Preforms mehr transportiert und gegriffen werden müssen. Ferner wäre es möglich, im Rahmen einer Programmroutine die Greiferklauen zu einer Greifposition zu betätigen, jedoch nur so weit, dass zwar ein Preform ergriffen werden könnte, nicht aber der im Durchmesser kleinere Aufnahmedorn. Hierfür ist nicht unbedingt ein Erkennungssensor notwendig, sondern es könnte diese Programmroutine über eine Kraftsteuerung des Antriebs der Greiferklauen vorgenommen werden. Falls sich nämlich in Erwartung eines Preforms dann keine Greifkraft aufbaut, wird dies als Indiz für die Abwesenheit eines Preforms genommen, und werden die Greiferklauen entweder in dieser nicht vollständig zugestellten Position gehalten oder wieder in die Freigabeposition gebracht. Um Kollisionen mit dem Aufnahmedorn mit Sicherheit zu vermeiden, könnten die Greiferklauen sogar durch individuelle Betätigung über die Freigabeposition hinaus geöffnet werden. Auf diese Weise entstehen bei ausbleibenden Preforms keine Betriebsstörungen oder Schäden, insbesondere auch in einem Fall, in welchem ein Preform modernen Trends nach Preform-Materialeinsparung folgend ein so niedriges Gewinde aufweist, dass der Aufnahmedorn bis in die Ebene der Bewegungsbahn der Greiferklauen eingreift. Insbesondere kann es sehr vorteilhaft sein, die Auswertung direkt über eine weg- und kraftgesteuerte Betätigung der Greiferklauen umzusetzen. Die Greiferklauen werden z.B. von dem Antrieb weggesteuert an die Position bewegt, an der sich normalerweise ein Preform befindet. An dieser Position wird auf eine Kraftsteuerung umgestellt. Erkennt die Steuerung des Antriebs, dass sich keine Haltekraft aufbaut, bestätigt dies, dass auf dem Aufnahmedorn kein Preform vorhanden ist. Die Greiferklauen werden dann nicht mehr weiter für eine Übernahme eines Preforms zu- oder wieder aufgestellt. Zweckmäßig werden die Greiferklauen sogar entgegengesetzt, d.h. in Öffnungsrichtung verstellt, um eine Kollision zwischen dem Aufnahmedorn und den Greiferklauen mit erhöhter Sicherheit zu vermeiden. Der bei der Wegsteuerung zu durchfahrende Winkel oder Weg ist preformabhängig und kann, wie auch die bei der Kraftsteuerung erzeugte Greifkraft, vom Benutzer vorab in die Steuerung eingegeben werden. Ebenfalls ist es möglich, diesen durch einen, insbesondere optischen, Sensor zu detektieren und auszuwerten.

Bei einer zweckmäßigen Ausführungsform der Rundlauf-Behälterbehandlungsmaschine sind beide bzw. alle vorgesehenen Greiferklauen über einen gemeinsamen oder über je einen eigenen elektrischen oder magnetischen Antrieb voneinander verschieden betätigbar. Ist ein gemeinsamer Antrieb an der Halterung vorgesehen, muss die Bewegungs- und/oder Kraftübertragung auf die Greiferklauen entsprechend gestaltet werden, um diese nicht nur symmetrisch, sondern voneinander verschieden zu betätigen. Weist jede Greiferklaue einen eigenen Antrieb auf, lassen sich die unterschiedlichen Betätigungen besonders einfach steuern und gegebenenfalls regeln. Der jeweilige elektrische Antrieb könnte als Piezo-Antrieb ausgelegt sein.

Bei einer günstigen Ausführungsform der Rundlauf-Behälterbehandlungsmaschine sind zwei Greiferklauen vorgesehen. Die Greiferklauen sind an der Halterung jeweils um eine Schwenkachse schwenkend bewegbar (Zangenprinzip). Dabei weisen die beiden Greiferklauen, vorzugsweise, Greifbereiche auf, die für den Preform oder Behälter in der Greifposition gemeinsam eine Zweipunkt- oder Dreipunkt- oder sogar Vierpunkt-Haltewirkung erzeugen, so dass der Preform oder Behälter, am Mündungsbereich oder an der Außenwand ergriffen, stets zwischen den Greiferklauen eine präzise Positionierung einzunehmen gezwungen ist, und auch so, dass die individuellen und/oder separaten Betätigungen der Greiferklauen auf exakt vorbestimmte Weise auf den Preform bzw. Behälter übertragen werden, und dieser seine Position nicht selbsttätig und unkontrolliert zu verändern vermag.

Steuerungsseitig können, zweckmäßig, die schwenkend bewegbaren Greiferklauen unter Aufrechthalten der Greifposition relativ zur Halterung zwar in der gleichen Schwenkrichtung, jedoch individuell, d.h. voneinander verschieden, z.B. über individuell unterschiedliche Schwenkwinkel betätigbar sein. Dabei sind, vorzugsweise, die Schwenkachsen der beiden Greiferklauen voneinander beabstandet, beispielsweise derart, dass in einer Ausgangs-Greifposition beide Greiferklauen in etwa zueinander parallel und senkrecht von der Halterung abstehen.

Bei einer zweckmäßigen Ausführungsform umfasst der jeweilige eigene magnetische Antrieb einer Greiferklaue mit der Greiferklaue verbundene, gegensinnig polarisierte Permanentmagneten und wenigstens eine an eine Steuerung angeschlossene Magnetspule. Um jede Greiferklaue in beiden Bewegungsrichtungen präzise gesteuert oder geregelt betätigen zu können, sind, vorzugsweise, pro Greiferklaue zwei Magnetspulen den Permanentmagneten zugeordnet, obwohl eine Magnetspule durch entsprechende Stromsteuerung durchaus unterschiedliche Schwenkhübe unter Aufrechthalten der Greifposition bewerkstelligen kann. Dies ist eine baulich einfache und kostengünstige und funktionssichere Ausführungsform, wobei jedoch eine feinfühlige Regelung oder Ansteuerung erschwert ist, und gegebenenfalls ein Kraftspeicher zumindest zum Erzeugen einer Grundhaltekraft die Greiferklauen beaufschlagen kann.

Eine besonders zweckmäßige Ausführungsform zeichnet sich dadurch aus, dass der jeweilige eigene elektrische Antrieb einer Greiferklaue einen an eine Steuerung angeschlossenen elektrischen Servomotor aufweist, vorzugsweise einen kraft- und/oder weg- und/oder positionsgeregelten Servomotor. Solche Servomotoren sind kostengünstig in unterschiedlichsten Spezifikationen verfügbar, mit moderatem Energieaufwand betreibbar, feinfühlig regelbar, können reinraumtauglich sein, und haben geringe Abmessungen und geringes Gewicht. Der elektrische Antrieb könnte als Piezo-Antrieb ausgelegt sein. Dabei ist gegebenenfalls ein jeweiliger eigener Servomotor einer Greiferklaue entweder als Direktantrieb an der Schwenkachse der Greiferklaue in der Halterung platziert oder über ein Zahnradgetriebe mit der Schwenkachse oder einer Welle gekoppelt. Wie die Schwenkachsen können die beiden Servomotoren dank ihrer kleinen Baugrößen nebeneinander an der Halterung installiert sein. Zweckmäßig und zur Bauraumeinsparung sind beide Servomotoren jedoch einander überlagernd und übereinander und/oder hintereinander angeordnet, wodurch sich eine sehr kompakte Bauform des Greifers ergibt. Ein Zahnradgetriebe kann Kunststoffzahnräder enthalten, die selbstschmierend und leicht sind.

Damit der Preform oder Behälter in der Greifposition nicht nur im Wesentlichen in und gegen die Bewegungsrichtung der Halterung über die Greiferklauen verlagerbar ist, sondern auch in Längsrichtung der Greiferklauen, beispielsweise um einen Versatz des Zentrums des Preforms oder Behälters aufgrund der Schwenkbewegung der Greiferklauen zu kompensieren oder sogar zu überkompensieren, ist bei einer weiteren zweckmäßigen Ausführungsform zumindest eine der Greiferklauen in ihrer Längsrichtung teleskopierbar ausgebildet, wobei ein elektrischer oder magnetischer Hilfsantrieb oder Servomotor zum Teleskopieren der Greiferklaue vorgesehen ist. Vorzugsweise greift an einem Halterungsträger, wie einem Teilungsverzugs-Ausgleichsarm oder einer Tragplatte, ein Linear- oder Drehantrieb oder ein Linear- und ein Drehantrieb, vorzugsweise mit wenigstens einem elektrischen Servomotor, zum Verstellen der Halterung relativ zum Halterungsträger an, und ist an der Halterung wenigstens ein Antrieb für beide Greiferklauen oder je ein eigener Antrieb für jede Greiferklaue zumindest zum Verlagern der Greiferklauen, vorzugsweise unter Aufrechthalten der Greifposition, relativ zur Halterung, vorgesehen. Dieser spezielle Greifer kann beispielsweise bei der Bewegung seiner Halterung das Zentrum des ergriffenen Preforms oder Behälters zumindest zeitweilig der Bewegungsbahn des Zentrums einer Blasform oder dergleichen folgen lassen, und zwar, zweckmäßig, ohne Verwendung bisher konventioneller Kurvenbahnsteuerungen. Dieses Greiferantriebsprinzip ist besonders zweckmäßig für einen Teilungsverzugsstern einer Rundlauf-Behälterbehandlungsmaschine oder in Zwischenstationen von Rundlauf-Behälterbehandlungsmaschinen in einer Behälterbehandlungsanlage oder in einem Preferential-Heating-Zwischenmodul.

Insbesondere ist auch daran gedacht, einen Preform mit mindestens drei individuell und/oder separat betätigbaren Greiferklauen zu halten. Auf diese Weise ist es beispielsweise möglich, zunächst den Preform mit zwei Greiferklauen zu fassen, und mit der wenigstens einen weiteren Greiferklaue den Preform relativ zu den zwei halternden Greiferklauen zu einer Sollposition zu verlagern. Dieses Prinzip kann bei allen Verfahren, beispielsweise vorteilhaft zur Ausrichtung und Positionierung, aber auch zum Temperieren (Preferential-Heating-Prozess) oder zum Auswerfen eines Preforms, verwendet werden. Hier ist es denkbar, dass die zwei zunächst fassenden Greiferklauen über einen gemeinsamen Antrieb betätigbar sind, jedoch die dritte oder jede weitere Greiferklaue mittels eines separaten Antriebs. Auf diese Weise können eine Mittelpunkt-Sollposition von zum Beispiel im Durchmesser unterschiedlichen Preforms bei einem Sortenwechsel oder die Quetschung beim Preferential-Heating-Prozess eingestellt bzw. geregelt werden.

Bei einer weiteren zweckmäßigen Ausführungsform sind die beiden schwenkend beweglichen Greiferklauen unter Beibehalt der Greifposition über einen gemeinsamen, an der Halterung angeordneten Servomotor als elektrischer Antrieb, zweckmäßig regelbar, unter Zwischenschaltung eines Zahnrad- oder Nockengetriebes in der gleichen Richtung über unterschiedliche Schwenkwinkel betätigbar, beispielsweise um einen Versatz zwischen dem Zentrum des Preforms und dem Zentrum der Blasform oder den Blasformhälften zu kompensieren, ohne die Greifposition aufzugeben. Allerdings kann das Zahnrad- oder Nockengetriebe auch so ausgebildet werden, dass zwar die Greifposition aufrecht gehalten, die Haltekraft kurz vor oder beim Schließen der Blasform jedoch reduziert wird. Im Zahnrad- oder Nockengetriebe bieten sich hier Kunststoffzahnräder oder Kunststoffnocken oder Verbundzahnräder oder Verbundnocken an, die beispielsweise selbstschmierend und leicht sind. Ein gemeinsamer elektrischer Antrieb könnte als Piezo-Antrieb ausgelegt sein.

Bei einer besonders zweckmäßigen, ein Nockengetriebe aufweisenden Ausführungsform eines Greifers einer Rundlauf-Behälterbehandlungsmaschine umfasst das Nockengetriebe einen symmetrischen oder asymmetrischen, drehbar gelagerten Nocken, vorzugsweise einen austauschbaren Nocken aus einem Bausatz unterschiedlicher asymmetrischer Nocken. Dieser Nocken greift in einem vorbestimmten Abstand von den Schwenkachsen der Greiferklauen zwischen die Greiferklauen oder zwischen Greiferklauen-Verlängerungen ein. In diesem Fall kann es zweckmäßig sein, wenn ein Kraftspeicher die Greiferklauen in Richtung zur Greifposition und gegen den Nocken vorspannt, der bei Ansteuerung des gemeinsamen Antriebs jedoch die schwenkend bewegbaren Greiferklauen über unterschiedliche Schwenkwinkel und Beibehalt der Greifposition betätigt. Der Nocken generiert die unterschiedlichen Schwenkwinkel beispielsweise aufgrund der unterschiedlichen Angriffspunktentfernungen von den Schwenkachsen der Greiferklauen, wobei diese Wirkung mit einem asymmetrischen Nocken noch verstärkt werden kann. Unter asymmetrisch wird dabei ein Nocken verstanden, der beispielsweise zwei Nockenvorsprünge oder Nockenvertiefungen unterschiedlicher Höhen und/oder Tiefen und/oder Winkel-Orientierungen in Bezug auf die Drehachse des Nockens aufweist.

Bei einer anderen zweckmäßigen Ausführungsform mit einem besonders einfachen Nockengetriebe und einem gemeinsamen Antrieb ist ein vom Antrieb linear verschiebbarer Doppelnocken mit Nockenflächen unterschiedlicher Steigungen vorgesehen, an denen Nockenfolgeglieder der Greiferklauen oder von Greiferklauen-Verlängerungen angreifen. Obwohl der Bewegungshub des Doppelnockens für beide Greiferklauen derselbe ist, wird durch die unterschiedlichen Steigungen der Nockenflächen die eine Greiferklaue über einen anderen Schwenkwinkel als die andere betätigt, wobei jedoch die Greifposition aufrecht gehalten wird.

Bei einer zweckmäßigen Ausführungsform der Rundlauf-Behälterbehandlungsmaschine sind in der Steuerung für den Antrieb oder die Antriebe des Greifers wahlweise abrufbare, unterschiedliche Haltekraftprofile und/oder Temperierkontaktelement-Kontaktdruckprofile für unterschiedliche bzw. unterschiedlich große Sorten von Preforms oder Behältern und unterschiedlich weite, vorab definierte Greifpositionen abgespeichert. Dies ermöglicht eine rasche Anpassung oder Umstellung beispielsweise im Fall eines Sortenwechsels oder einer Änderung der Maschinenleistung und dergleichen, und zwar ohne manuellen Eingriff von Bedienungspersonal, bzw. eine jederzeitige Möglichkeit zur Nachkalibrierung im Falle aufgetretener oder sich abzeichnender Qualitätseinbußen an den Preforms oder Behältern. Im Falle eines Sortenwechsels wird ferngesteuert die jeweils passende Greifposition der Greiferklauen gewählt, was Umrüstzeiten erheblich reduzieren lässt. Es können auch Sollpositionen, Solllängen der Greiferklauen und dergleichen in Zuordnung zu unterschiedlich großen Sorten der Preforms oder Behälter programmiert oder abrufbar oder einstellbar sein, ohne dass Bedienungspersonal an den Greifern zu arbeiten braucht. Diese Programmierbarkeit und/oder Einstellbarkeit der Steuerung ist mit der individuellen und/oder separaten Betätigung der Greiferklauen des Greifers zweckmäßig, um den zumindest einen zusätzlich geschaffenen Freiheitsgrad des Greifers als Kompensationsmöglichkeit selbst gewinnbringend für unterschiedliche Behälterbehandlungsverfahren nutzen zu können.

Da der Greifer mit dem wenigstens einen Antrieb an der Halterung keine aufwendigen Kurvenbahnsteuerungen benötigt, lässt sich zumindest der Greifer mit seinen Greiferklauen einfach in einem Reinraum platzieren. Eine Reinraumdichtung oder -begrenzung wird zum Beispiel an der Halterung zwischen dem wenigstens einen Antrieb oder Servomotor und dem jeweiligen Greifbereich der Greiferklaue angeordnet. Dabei ist eine zwischen jeder Greiferklaue und der Halterung an der Schwenkachse der Greiferklaue abgestützte Dichtung einer Reinraum-Begrenzungswand oder eines Begrenzungsfaltenbalgs, wobei letzterer speziell im Falle eines Teilungsverzugssterns die Bewegungen des Übergabearms problemlos mitzumachen vermag.

Bei einer weiteren zweckmäßigen Ausführungsform der Rundlauf-Behälterbehandlungsmaschine ist der Greifer ein Preform-Zuführ- und -Übergabegreifer in einem Sternrad einer geteilte Blasformen aufweisenden Blasstation einer als Streckblasmaschine ausgebildeten Behälterbehandlungsmaschine. Die Steuerung des Antriebs oder jedes eigenen Antriebs der Greiferklauen ist mit wenigstens einer Sensoranordnung, vorzugsweise einer Kamera oder einem Näherungsinitiator, verbunden, die die Relativposition zwischen einem im Greifer übergabebereiten Preform und entweder dem Zentrum und/oder den Formhälften der Blasform oder sogar einer versagensbedingten in der Blasform verbliebenen Reckstange oder einer nicht abgehobenen Blasdüse und/oder einer nicht entriegelten Blasform-Verriegelung abgreift und auswertet. Das Auswerteergebnis wird zum Ansteuern des Antriebs oder jedes eigenen Antriebs der Greiferklauen entweder zwecks Umpositionierung des Preforms in das Zentrum der Blasform oder zwecks schadensabkehrender Freigabe des Preforms aus dem Greifer und/oder kollisionssicherer Öffnung des Greifers ausgewertet. So lässt sich im laufenden Betrieb der Versatz zwischen dem Zentrum des Preforms und der Blasform kompensieren, beispielsweise auch bei einer Änderung der Maschinenleistung, und/oder lässt sich im Falle eines versagensbedingten Verbleibens der Reckstange in der geöffneten Blasform eine Kollision zwischen dem Preform und der Reckstange oder anderer versagensbedingter Fehlstellungen von Teilen einer Blasstation vermeiden, indem der Preform einfach abgeworfen wird. Flankierend kann dann der Greifer in der Freigabeposition betätigt bleiben, um auch eine Kollision der Greiferklauen selbst zu vermeiden.

Bei einer weiteren Ausführungsform der Rundlauf-Behälterbehandlungsmaschine ist zumindest eine Greiferklaue bei einer Übergabe oder bei Abwesenheit eines Preforms oder zum Aussondern und Abwerfen eines Preforms, zum Beispiel zur Schadensabkehr, bei oder vor Erreichen eines jeweiligen Übergangspunktes routinemäßig oder aufgrund eines einen Bedarf anzeigenden Sensorsignals oder einer Steuerungsroutine in die Freigabestellung oder über diese hinaus in Öffnungsrichtung betätigbar. Dies kann in einem Transferstern zweckmäßig sein, der Preforms aus einem Heizmodul übernimmt und in eine Blasform übergibt, beispielsweise um bei Abwesenheit eines Preforms an einem Aufnahmedorn eine Kollision mit dem Aufnahmedorn zu vermeiden.

Bei einer weiteren Ausführungsform einer Rundlauf-Behälterbehandlungsmaschine sind in einem Übergabebereich von einer Transportstrecke zu einer anderen die Greiferklauen der Greifer beider Transportstrecken in einer gemeinsamen Laufebene angeordnet. Die Greiferklauen greifen somit entweder am Haltering oder Sicherungsring oder auch am Gewinde des Preforms oder Behälters in der gleichen Ebene an. Damit es zu keinen Kollisionen zwischen den Greiferklauen kommt oder bei der Übergabe unerwünschte Reibungskräfte vermieden werden, ist über die Steuerung jede Greiferklaue individuell und einzeln relativ zu den Halterungen in und gegen die Transportrichtung betätigbar, und zwar so, dass der Preform oder Behälter zu keiner Zeit vollständig frei kommt, sondern gerade so viele Kontaktpunkte mit den aktiven Greiferklauen hat, dass seine Position bei der Übergabe gesichert bleibt. Dies ist besonders zweckmäßig im Falle von Preforms oder Behältern mit sehr niedrigen Gewinden bzw. ohne Haltering, wie es einem modernen Trend speziell bei Kunststoffbehältern (PET-Flaschen) entspricht.

Insbesondere eignet sich diese Ausführungsform für eine Transportstrecke, die einen mäanderförmigen Transportweg für die Behältnisse aufweist, wobei die Behältnisse von einem Transportkarussell bzw. Übergabestern mit mehreren, am Außenumfang angeordneten Greifern an ein im Wesentlichen gleichartiges Transportkarussell oder einem Übergabestern übergeben werden. Bei der Übergabe in einer gemeinsamen Laufebene der Greiferklauen findet insbesondere keine, wie im Stand der Technik übliche, punktförmige Übergabe statt, sondern die Übergabe des Behälters oder Preforms wird auf einen Bereich ausgedehnt, der insbesondere mehr als 3°, bevorzugt mehr als 6°, einer Umdrehung eines rundlaufenden Übergabesterns beträgt. Bei üblichen Übergabesterndurchmessern ergeben sich somit Bereiche von mehr als 2,5 cm, bevorzugt mehr als 5,0 cm, Länge. Der Übergabebereich kann sogar auf mehr als etwa 10,0 cm eingestellt werden. Insbesondere werden bei der Übergabe beide Greiferklauen des Übergabegreifers am Übergabestern gleichsinnig in eine Richtung (in Transportrichtung vorlaufend oder rücklaufend) verschwenkt. Zweckmäßig kann es bei der verlängerten Übergabe/Übernahme zum zeitweisen Abrollen des Behälters oder Preforms zwischen der nacheilenden Greiferklaue des Übergabegreifers und der voreilenden Greiferklaue des Übernahmegreifers kommen. Günstig kann sich dabei das Behältnis an mindestens einem Zeitpunkt innerhalb des ausgedehnten Übergabebereichs in Kontakt mit nur einer Greiferklaue des Übergabegreifers und einer Greiferklaue des Übernahmegreifers befinden.

Bei der Übergabe in einer Ebene wird insbesondere mindestens eine Greiferklaue (insbesondere die in Transportrichtung voreilende beim voreilenden Verschwenken der Greiferklauen des Übergabegreifers in Transportrichtung oder die in Transportrichtung nacheilende Greiferklaue beim Verschwenken der Greiferklauen des Übergabegreifers gegen die Transportrichtung) des Übernahmegreifers derart positioniert, dass diese Greiferklaue mit ihrer in Greifrichtung gesehen inneren Fläche zwischen den Greiferklauen des Übergabegreifers in Kontakt mit dem Behältnis kommt. Da eine ordnungsgemäße Halterung des Behältnisses durch eine Greiferklaue des Übergabegreifers und eine Greiferklaue des Übernahmegreifers gewährleistet ist, kann die zweite Greiferklaue des Übergabegreifers weggeschwenkt werden. Durch gleichsinniges Verschwenken der das Behältnis haltenden Greiferklauen wird so Platz für die dann in Kontakt mit dem Behältnis zu bringende andere Greiferklaue des Übernahmegreifers geschaffen, bis letztendlich beide Greiferklauen des Übernahmegreifers ausschließlich in Kontakt mit dem Behältnis sind.

Schließlich ist es bei einer weiteren wichtigen Ausführungsform einer Rundlauf-Behälterbehandlungsmaschine zweckmäßig, wenn in einer Station eines Sterilisierers oder Rinsers einer Sterilisier- oder Rinsmittel-Einlassdüse z.B. für den Mundstück-Öffnungsrand eines Preforms oder Behälters, der Öffnungsrand unter Ausrichten des Mundstücks auf die Einlassdüse vom Greifer mit in der Greifposition befindlichen Greiferklauen positionierbar bzw. bewegbar ist. Hierbei ist mittels des Greifers die Position des Öffnungsrandes relativ zur Einlassdüse durch individuelle oder separate Betätigung der Greiferklauen relativ zur Halterung unter Beibehalt der Greifposition über den Antrieb veränderbar. Auf diese Weise lässt sich die Sterilisier- oder Rinswirkung intensivieren, weil die Innenwand des Preforms oder Behälters relativ zum Strahl des Mittels bewegt und besser beaufschlagt wird, und, falls vorhanden, die Abdeckwirkung eines Anlagestegs gegen vollflächiges Applizieren des Mittels vom Greifer kompensiert wird, so dass der gesamte Öffnungsrand ordnungsgemäß behandelt wird. Ferner kann eine Umlenkglocke für wieder aus dem Mundstück austretendes Mittel vorgesehen sein, um auch das Gewinde außen zu behandeln. Auch für das Gewinde lässt sich die Wirkung intensivieren, so dass ein hoher Reinheitsgrad mit weniger Sterilisier- oder Rinsmittel erzielbar ist. Dank der individuellen Betätigbarkeit der Greiferklauen ist es sogar zweckmäßig, z.B. auch Stellen für die Applikation des Mittels zeitweise freizugeben, die die Greiferklauen in der Halteposition kontaktierten. Beispielsweise könnte dies durch teleskopartiges Ausfahren einer Greiferklaue mit einer reibungsbedingten Drehung des Behälters oder Preforms um dessen Längsachse realisiert werden. Eine Drehung oder eine zeitweise Fremdhalterung, während die Greiferklauen des Greifers kurzzeitig aus dem Kontakt betätigt werden, könnte zweckmäßig durch ein anderes, eigenständiges Kontaktelement bewerkstelligt werden, welches am Preform oder Behälter unabhängig von den zeitweise gelösten Greiferklauen hält.

Anhand der Zeichnung werden Ausführungsformen des Erfindungsgegenstandes erläutert. Es zeigen:
- Fig. 1: eine Schemadraufsicht einer Behälterbehandlungsanlage mit mehreren Behälterbehandlungsmaschinen und Transportstrecken als nicht beschränkende Ausführungsform,
- Fig. 2: eine Draufsicht auf eine Ausführungsform eines Greifers, der in der Behälterbehandlungsanlage von Fig. 1 verwendbar ist,
- Fig. 3: einen Vertikalschnitt des Greifers von Fig. 2,
- Fig. 4: eine Schemadarstellung beispielsweise des Greifers von Fig. 2 und 3 bei Anordnung in einem Reinraum,
- Fig. 5: den Greifer von Fig. 4 (analog zu Fig. 3) in einem Vertikalschnitt im Reinraum,
- Fig. 6: eine Draufsicht einer weiteren Ausführungsform eines Greifers,
- Fig. 7: eine weitere Ausführungsform eines Greifers,
- Fig. 8: eine Draufsicht des Greifers beispielsweise von Fig. 2 bei einer asymmetrischen Betätigung einer Greiferklaue,
- Fig. 9: eine Draufsicht auf eine andere Ausführungsform eines Greifers mit einem an sich bekannten, symmetrischen Nocken,
- Fig. 10: Detailvarianten asymmetrischer Nocken beispielsweise eines Bausatzes zur wahlweisen Verwendung bei dem Greifer der Fig. 9,
- Fig. 11: eine weitere Ausführungsform eines Greifers in Draufsicht,
- Fig. 12: eine weitere Ausführungsform eines Greifers in Draufsicht,
- Fig. 13: eine weitere Ausführungsform eines Greifers in einer Betriebsposition,
- Fig. 14: eine weitere Ausführungsform eines Greifers in Draufsicht, wobei zwei unterschiedliche Detailvariationen angedeutet sind,
- Fig. 15: beispielsweise den Greifer von Fig. 14 in einer anderen Betriebsposition nach einem Sortenwechsel,
- Fig. 16: einen schematischen Vertikalschnitt eines Übergabe- bzw. Teilungsverzugssterns mit einem dargestellten Greifer,
- Fig. 17: einen Vertikalschnitt einer anderen Ausführungsform eines Übergabe- oder Teilungsverzugssterns mit einem dargestellten Greifer,
- Fig. 18: einen Vertikalschnitt einer weiteren Ausführungsform eines Übergabe- oder Teilungsverzugssterns mit einem dargestellten Greifer in einem Reinraum,
- Fig. 19: den Übergabe- bzw. Teilungsverzugsstern von Fig. 17 bei Eingliederung in einen Reinraum,
- Fig. 20: eine andere Ausführungsform eines Greifers (nicht zur Erfindung gehörig),
- Fig. 21: eine weitere Ausführungsform eines Greifers in Draufsicht (nicht zur Erfindung gehörig),
- Fig. 22: eine weitere Ausführungsform eines Greifers in Draufsicht,
- Fig. 23: in Draufsicht schematisch einen Übergabevorgang und Verfahrensablauf zwischen einem Teilungsverzugsstern mit einem dargestellten Greifer und einer geteilten Blasform an einem Blasrad,
- Fig. 24: in Draufsicht eine Übergabesituation bzw. einen Verfahrensablauf bei der Übergabe von einem Transferstern zu einem anderen,
- Fig. 25: in Draufsicht eine Übergabesituation bzw. einen Verfahrensablauf zwischen zwei mit Greifern bestückten Transfersternen, wobei an jedem Transferstern ein Greifer in mehreren Momentaufnahmen dargestellt ist,
- Fig. 26: eine Draufsicht einer Übergabesituation bzw. eines Verfahrensablaufs bei der Übergabe von Behältern aus einem in Momentaufnahmen dargestellten Greifer in eine Lufttransportvorrichtung,
- Fig. 27: eine weitere Ausführungsform eines Greifers,
- Fig. 28: eine weitere Ausführungsform eines Greifers in einem Sterilisierer in zwei unterschiedlichen Betriebspositionen,
- Fig. 29: einen Preform-Preferential-Heating-Prozess zur Herstellung eines ovalen Behälters, und
- Fig. 30: einen Preform-Preferential-Heating-Prozess zur Herstellung eines viereckigen Behälters.

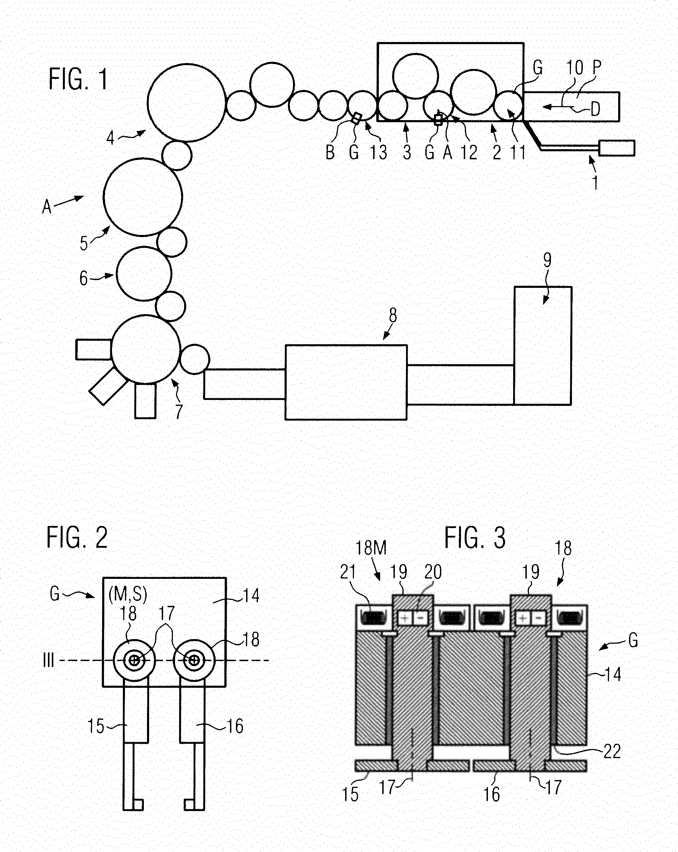

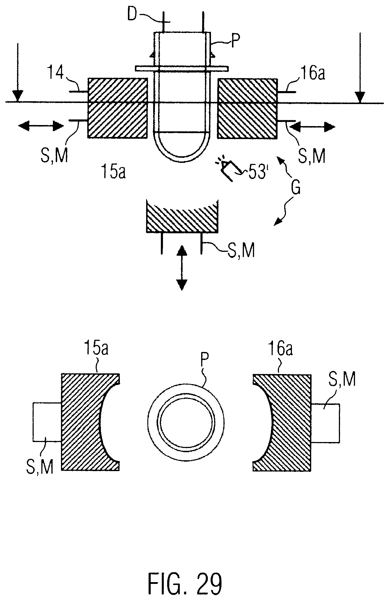

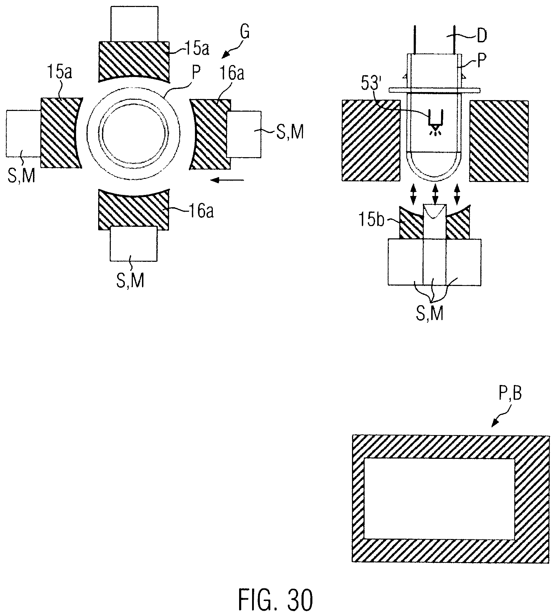

Eine in Fig. 1 als nicht beschränkendes Beispiel dargestellte Behälterbehandlungsanlage A umfasst eine Transportstrecke 10 für Preforms P als Teil eines Heizmoduls 1, in welchem die Preforms P beispielsweise an Aufnahmedornen D oder Innengreifern zu einer weiteren, von einem Transferstern bzw. Übergabestern definierten Transportstrecke 11 in beispielsweise einem Zwischenmodul 2 transportiert werden, in dem (optional) die Preforms P einem Preferential Heating-Prozess (siehe Fig. 29, 30) unterworfen werden. Sie werden dabei mit als Greiferklauen fungierenden Temperier-Kontaktelementen in Kontakt gebracht, um ein z.B. in Umfangsrichtung variierendes Temperaturprofil aufzubringen. Daran schließt sich als weitere Behälterbehandlungsmaschine 3 ein Blasmodul an, in welchem ein Transferstern 12 mit Teilungsverzugs-Kompensation mit Übergabearmen A und Greifern G die temperierten Preforms in geteilte Blas-formen übergibt. Die blasgeformten bzw. streckgeblasenen Behälter B werden dann über eine weitere Transportstrecke definierende Transfersterne bzw. Übergabesterne 13 zu einer weiteren Behälterbehandlungsmaschine in Form eines Sterilisierers (optional) transportiert, darin sterilisiert, und an einen Rinser 4 übergeben. Daran schließt sich ein Füller 5 über einen Übergabestern an, und danach über einen weiteren Übergabestern mit Greifern ein Verschließer 6, von welchem die gefüllten Behälter B über einen weiteren Übergabestern an einen Etikettierer 7 geliefert werden, und von dort beispielsweise über eine nicht näher hervorgehobene Transportvorrichtung linear einer weiteren Behälterbehandlungsmaschine 8 in Form eines Packers zugeführt werden, an den sich über eine weitere Transportstrecke ein Palletierer 9 anschließt. Die jeweilige Behälterbehandlungsmaschine 1, 2, 3, 4, 5, 6, 7, 8 , 9 könnte mit einer entsprechenden Transportstrecke 10, 11, 12, 13 und dergleichen auch im Stand-Alone-Betrieb installiert sein und betrieben werden, wobei zumindest eine der Transportstrecken 11, 12, 13 mit Greifern G (gesteuert oder ungesteuert) bestückt ist, die in vorbestimmten Bahnen zwangsweise bewegt werden, und jeweils einen Preform P oder Behälter B übernehmen, transportieren und abgeben. Die Transportstrecken 11, 12, 13 sind hier mäanderförmig ausgestaltet. Nicht dargestellt sind Pufferstrecken wie Lufttransporter, ebenfalls zweckmäßig bestückt mit Greifern G. Ferner könnte die Behälterbehandlungsanlage A alternativ oder additiv eine Beschichtungsmaschine, eine Laserschneidemaschine zur PET-Dosenherstellung, Behälter-Rumpfgreifertransportstrecken, Direktdruckaggregate, und dergleichen umfassen, bei denen ebenfalls Transportstrecken mit Greifern G vorgesehen sind. Bei dem Stern der Transportstrecke 11 kann es sich z.B. um einen Teilungsverzugsstern handeln. Die Übergabe der Behälter B von der Blasmaschine 3 an weitere Behandlungsmodule 4 kann - anstatt mit Transfersternen 13 - mit einem nicht gezeigten Lufttransporter durchgeführt werden.

Bei dem jeweiligen Greifer G ist durch eine individuelle Betätigbarkeit von Greiferklauen 15, 16 des Greifers relativ zu einer Halterung 14 ein zusätzlicher Freiheitsgrad gegeben, der bei der Behälterbehandlung zur Schadensabkehr und/oder Qualitätsverbesserung nutzbar ist. So könnte bei einem Verfahren zum Wärmebehandeln eines Preforms beispielsweise in dem Zwischenmodul 2 in Fig. 1 beim Preferential-Heating-Prozess der Kontakt des Preforms P mit Kontaktelementen, die als Greiferklauen 15a, 15b, 16a eines Greifers G (Fig. 29, 30) fungieren, individuell geregelt werden. Beim Preferential-Heating-Modus wird der Kontakt des Preforms P zwischen den Kontaktelementen unter Aufrechterhaltung der Greifposition des Greifers G relativ zur jeweiligen Halterung 14 bzw. Aufnahmedorn D geregelt. Hierzu kann vorzugsweise ein Signal eines Sensors 53' benutzt werden, das die Temperaturen am Preform innen und/oder außen abgreift. Die Betätigung der Greiferklauen 15, 16 wird zweckmäßig wegabhängig und/oder kraftabhängig geregelt, beispielsweise unter Anpassung an die Sorte des Behälters oder Preforms oder dessen individuell erforderliche Deformation oder Quetschung. Auf diese Weise wird nicht nur das Ausmaß der Quetschung der Preformwand durch das jeweilige Kontaktelement feinfühlig geregelt, sondern auch die aus dem Kontakt mit dem Kontaktelement resultierende Reaktionskraft am im Mündungsbereich des Preforms wirkenden Aufnahmedorn D. Es kann nur ein oder ein jedes Kontaktelement 15a, 15b in Fig. 29, 30 individuell und/oder separat betätigt werden. Die Kontaktelemente können auch, insbesondere die jeweils auf einer Seite des Preforms P liegenden jeweiligen Teile eines Kontaktelementes, sogar einteilig ausgebildet sein bzw. über einen gemeinsamen Mechanismus individuell und/oder separat betätigt werden.

Bei einer Übernahme eines Preforms P von einem Aufnahmedorn D, beispielsweise der Wärmebehandlungsstrecke 10 in Fig. 1, werden die Greiferklauen 15, 16 des, vorzugsweise vom Preform zu öffnenden, ungesteuerten, Greifers G vor der Übernahme des Preforms P vom Aufnahmedorn D durch routinemäßiges (in einer Steuerung programmiertes oder festgestelltes) oder bedarfsweises (durch Einsatz eines Erkennungssensors, der die Situation am Aufnahmedorn D ermittelt und auswertet) individuell betätigt, d.h. situationsabhängig. Diese Sicherheitsfunktion des Greifers G wäre an sich für den normalen Betriebsablauf unnötig, dient jedoch der präventiven Schadensabkehr für den Fall, dass ein Aufnahmedorn D keinen Preform P liefert, was unterschiedliche, betriebsbedingte oder gegebenenfalls nicht voraussehbare Gründe haben kann. Die Steuerung des Antriebs zumindest einer Greiferklaue kann darüber informiert sein, dass auf einem bestimmten Aufnahmedorn D kein Preform P geliefert werden wird. Beispielsweise könnte die Eingangssperre für Preforms zur Einfahrt in die Wärmebehandlungsstrecke 10 geschlossen worden sein, worüber die Steuerung informiert wird, so dass sie weiß, dass ab einem bestimmten Aufnahmedorn D keine Preforms P mehr zu übernehmen sind. Dann könnten die Greiferklauen in die Freigabestellung oder sogar über diese hinaus aufgestellt werden. Auf diese Weise entstehen bei Ausbleiben eines Preforms P keine Betriebsstörungen oder Schäden, insbesondere in einem Fall, in welchem ein Preform P modernen Trends nach Preform-Materialeinsparung folgend ein so niedriges Gewinde aufweist, dass der Aufnahmedorn D bis in die Ebene der Bewegungsbahn der Greiferklauen 15, 16 eingreift. Dabei kann es sehr vorteilhaft sein, die Auswertung direkt über eine weg- und kraftgesteuerte Betätigung der Greiferklauen umzusetzen. Die Greiferklauen 15, 16 werden z.B. weggesteuert in die Position betätigt, an der sich normalerweise der Preform P befindet und gegriffen würde. An dieser Position wird auf Kraftsteuerung umgestellt. Erkennt die Steuerung des Antriebs der Greiferklauen, dass sich keine Haltekraft aufbaut, bestätigt dies, dass auf dem Aufnahmedorn D kein Preform P vorhanden ist. Die Greiferklauen 15, 16 werden dann nicht mehr weiter für eine Übernahme des Preforms zugestellt. Zweckmäßig werden die Greiferklauen sogar entgegengesetzt, d.h. weiter in Öffnungsrichtung verstellt, um eine Kollision zwischen dem Aufnahmedorn und den Greiferklauen mit erhöhter Sicherheit zu vermeiden. Der bei der Wegsteuerung zu durchfahrende Winkel oder Weg der Greiferklauen ist preformabhängig und kann vom Benutzer vorab in die Steuerung eingegeben werden. Ebenfalls ist es möglich, diesen Winkel oder Weg durch einen, insbesondere optischen, Erkennungssensor zu detektieren und auszuwerten bzw. umzusetzen.

Der Greifer G der Ausführungsform der Fig. 2 weist eine Halterung 14 auf, die entlang der Transportstrecke zwangsweise bewegt wird und in der gezeigten Ausführungsform zwei um Schwenkachsen 17 an der Halterung 14 schwenkend bewegbare Greiferklauen 15, 16 aufweist. Jede Greiferklaue 15, 16 (es könnten auch drei oder mehr Greiferklauen vorgesehen sein) weist einen eigenen Antrieb 18 auf, nämlich entweder einen magnetischen Antrieb M oder einen elektrischen Antrieb (Servomotor S), der über eine nicht gezeigte Steuerung ansteuerbar ist und die Greiferklauen 15, 16 (zumindest eine der Greiferklauen) individuell und/oder separat um die Schwenkachse 17 betätigen kann. Die in Fig. 2 gezeigten Antriebe 18 sind an der Halterung 14 installiert und werden über nicht gezeigte Verbindungsleitungen mit elektrischer Energie versorgt, um die Greiferklauen 15, 16 zu betätigen. Der erwähnte elektrische Antrieb und auch bei weiteren Ausführungsformen von Greifern G erwähnte elektrische Antriebe könnte als Piezo-Antriebe ausgebildet sein.

Die mindestens dritte Greiferklaue (nicht gezeigt) kann dank ihrer individuellen Betätigbarkeit nicht nur dazu verwendet werden, den Preform P oder Behälter B in der Greifposition exakter zu positionieren, sondern auch dazu, den von zwei Greiferklauen 15, 16 gehaltenen Preform P oder Behälter B relativ zu diesen beiden Greiferklauen 15, 16 individuell zu verlagern, z.B. zu verschieben. Dabei können die beiden Greiferklauen über einen gemeinsamen Antrieb betätigt werden, während die mindestens dritte Greiferklaue mittels eines separaten Antriebs betätigt wird. So lässt sich beispielsweise eine Mittelpunkt-Sollposition von beispielsweise im Durchmesser unterschiedlichen Preforms bei einem Sortenwechsel nach Bedarf einstellen.

Fig. 3 zeigt im Vertikalschnitt die block- oder plattenförmige Halterung 1, in welcher über Kunststoffgleitbuchsen 22 jeweils eine Welle 19 um die Schwenkachse 17 drehbar gelagert ist und am unteren Ende eine Greiferklaue 15, 16 trägt. Im oberen Ende jeder Welle 19 sind zwei gegensinnig polarisierte Permanentmagneten 20 angeordnet, auf die an der Halterung 14 installierte Magnetspulen 21 ausgerichtet sind, und zwar in der Ausführungsform in Fig. 3 pro Welle 19 zwei beispielsweise diametral gegenüberliegende Magnetspulen 21.

In den Fig. 2 und 3 handelt es sich um einen gesteuerten Greifer G, dessen Greiferklauen 15, 16 durch die magnetischen Antriebe 18, M direkt individuell und/oder separat relativ zur Halterung 14 betätigbar sind, um die beispielsweise in Fig. 2 gezeigte, definierte Greifposition einzustellen, oder die Greiferklauen 15, 16 in eine nicht gezeigte, definierte Freigabeposition auseinander zu spreizen, und zwar entweder symmetrisch oder asymmetrisch, je nach Bedarf. Insbesondere handelt es sich beim Antrieb 18, M um einen regelbaren Direktantrieb mit einer Vielzahl von Spulen, die jeweils am bzw. beim Umfang der Welle 19 angebracht sind.

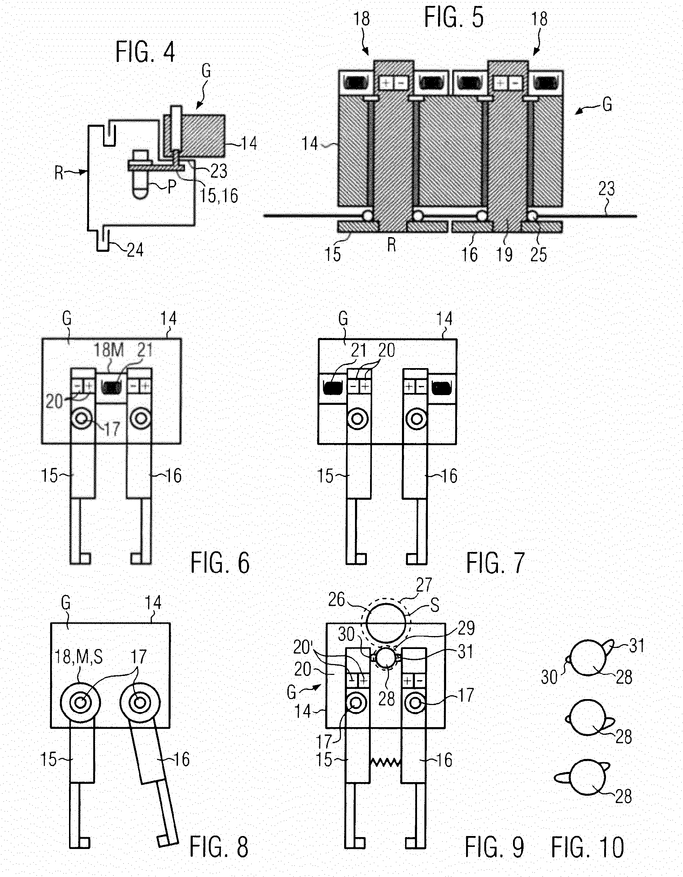

In den Fig. 4 und 5 ist beispielsweise der Greifer der Fig. 2 und 3 mit seinen Greiferklauen 15, 16 und einem davon ergriffenen Preform P in einem Reinraum R angeordnet, wobei eine Reinraumbegrenzungswand 23 zwischen der Halterung 14 und den Greiferklauen 15, 16 abdichtet. Weitere hydraulische Abdichtungen 24 sind beispielsweise zwischen einem drehenden Teil des Reinraums R und einem stationären Teil angeordnet (zum Beispiel eine hydraulische Abdichtung bzw. ein sogenanntes "Wasserschloss").

Fig. 5 verdeutlicht, dass die Begrenzungswand 23 mit Dichtungsringen 25 an den Wellen 19 der beiden Greifklauen 15, 16 abdichtend angreift, so dass die Halterung 14 mit den beiden Antrieben 18 außerhalb des Reinraums R platziert ist, und die Greiferklauen 15, 16 im Reinraum R arbeiten.

Fig. 6 verdeutlicht eine weitere Ausführungsform eines Greifers G mit zwei schwenkend bewegbaren Greiferklauen 15, 16 an der Halterung 14, wobei ein gemeinsamer Antrieb 18, hier ein magnetischer Antrieb M, für die Greiferklauen 15, 16 an der Halterung 14 installiert ist. An jeweils einer Greiferklauen-Verlängerung jenseits der Schwenkachse 17 sind zwei gegensinnig polarisierte Permanentmagneten 20 angeordnet, die mit einer dazwischenliegenden Magnetspule 21 magnetisch zusammenwirken, um die Greiferklauen 15, 16 individuell und/oder separat schwenkend zu verstellen. Es kann hier die Anordnung der gegensinnig polarisierten Permanentmagneten 20 so getroffen sein, dass diese auch nach Art einer magnetischen Feder die Greiferklauen 15, 16 (in Öffnungsrichtung) hier in Schließrichtung beaufschlagen. Alternativ (nicht gezeigt) kann ein anderer Kraftspeicher wie eine mechanische Feder zwischen den Greiferklauen 15, 16 oder den Greiferklauen-Verlängerungen angeordnet sein, welche die Greiferklauen 15, 16 in Schließrichtung vorspannt. Die Schwenkachsen 17 der Greiferklauen 15, 16 sind etwa soweit voneinander beabstandet, dass die Greiferklauen 15, 16 in der beispielsweisen Greifposition in Fig. 6 zueinander im Wesentlichen parallel sind, hingegen in der nicht dargestellten Freigabeposition scherenartig auseinandergespreizt werden. Obwohl es sich in Fig. 6 grundsätzlich um einen ungesteuerten Greifer G handeln könnte, ist dieser durch Einfluss der Antriebe 18, M zumindest in bestimmten Betriebsphasen ein gesteuerter Greifer.

In der Ausführungsform in Fig. 7 ist jeder Greiferklaue 15, 16 an der Halterung 14 des Greifers G eine Magnetspule 21 zugeordnet, die mit den beiden gegensinnig polarisierten Permanentmagneten 20 in jeder Greiferklauen-Verlängerung zusammenwirkt, um die Greiferklauen 15, 16 wahlweise symmetrisch oder individuell und/oder separat zu betätigen. Die Anordnung der Permanentmagneten 20 in Fig. 7 ist beispielsweise so gewählt, dass sich die zueinanderweisenden, gleichsinnig polarisierten Permanentmagneten in den beiden Greiferklauen 15, 16 (angedeutet durch ein Pluszeichen) abstoßen und sozusagen als magnetische Schließfeder des Greifers G fungieren.

Fig. 8 zeigt beispielsweise den Greifer G von Fig. 2 mit den hier als Direktantrieben ausgebildeten Antrieben 18 (magnetische Antriebe M oder mit Servomotoren S) in einer Betriebsphase, in der nur die rechte Greiferklaue 16 asymmetrisch nach außen betätigt ist.

Die Ausführungsform des Greifers G in Fig. 9 weist an der Halterung 14 der beiden um ihre beabstandeten Schwenkachsen 17 schwenkend beweglichen Greiferklauen 15, 16 (grundsätzlich ungesteuerter Greifer G entweder mit der von den Permanentmagneten 20 definierten magnetischen Schließfeder 20' und/oder mit einer mechanischen oder Kunststoff-Schließfeder 20") für beide Greiferklauen 15, 16 einen gemeinsamen Antrieb in Form eines elektrischen Servomotors 26 (S) auf, der zum drehenden Antreiben eines an sich bekannten, symmetrischen Nockens 28 an der Halterung installiert ist. Hier ist ein Zahnradgetriebe (Verzahnungen 27, 29 am Servomotor 26 und dem Nocken 28) vorgesehen, um den Nocken 28 in der einen oder anderen Drehrichtung zu verdrehen und über die Greiferklauen-Verlängerungen die Greiferklauen 15, 16 relativ zur Halterung 14 und verschieden voneinander zu betätigen und zwar durch die sich verändernden Abstände der Angriffspunkte von Nockenerhebungen 30, 31 des in Fig. 9 symmetrischen Nockens 28 (die Nockenerhebungen 30, 31 liegen einander diametral gegenüber und sind beispielsweise gleich hoch und/oder verschieden hoch). Um die Schwenkachsen 17 werden bei Verdrehen des Nocken 28 die beiden Greiferklauen 15, 16 zwar (abhängig von der Drehrichtung des Nocken 28) relativ zur Halterung 14 nahezu symmetrisch aufeinander zu verschwenkt, jedoch über unterschiedliche Schwenkwinkel.

Fig. 10 verdeutlicht einen Bausatz unterschiedlicher asymmetrischer Nocken 28, die zum Beispiel an Stelle des an sich bekannten, symmetrischen Nockens 28 von Fig. 9 verwendbar sind. In Fig. 10 sind als Beispiele drei asymmetrische Nocken 28 angedeutet, deren Nockenerhebungen 30, 31 entweder drehversetzt und/oder unterschiedlich gegenüber der Drehachse orientiert und/oder unterschiedlich hoch sind, um bei Verdrehen über den Servomotor 26 die Greiferklauen 15, 16 über unterschiedliche Schwenkwinkel zu betätigen. Anstatt Nockenerhebungen 30, 31 können Nocken-Vertiefungen vorgesehen sein, um die Greiferklauen 15, 16 z.B. gleichsinnig zu verschwenken.

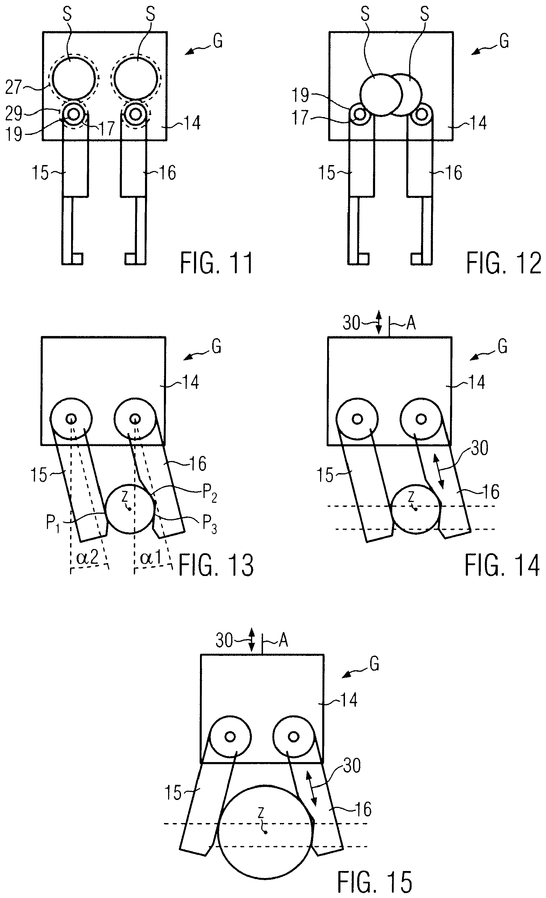

In der Ausführungsform des Greifers G in Fig. 11 sind an der Halterung 14 zwei elektrische Servomotoren S (zweckmäßig kraft- und/oder weggesteuert, das heißt regelbar) installiert, die über die Verzahnungen 27, 29 die Wellen 19 der beiden Greiferklauen 15, 16 sowohl symmetrisch als auch individuell und/oder separat verstellen können. Die beiden Servomotoren S sind beispielsweise mit dem Abstand der Schwenkachsen 17 nebeneinander in der Halterung 14 installiert. Die Verzahnungen greifen auf der gleichen Höhe an den Wellen 19 an.

In der Ausführungsform des Greifers G in Figur 12 sind ebenfalls zwei elektrische Servomotoren S an der Halterung 14 einer jeweils für eine Greiferklaue 15, 16, installiert, die aus Platzgründen jedoch einander überlagernd und übereinander platziert sind. Die Servomotoren S können abändernd zu der Darstellung in Fig. 12 komplett übereinander angeordnet sein und greifen mit den Verzahnungen auf verschiedenen Höhen an den Wellen 19 an, so dass Bauraum gespart wird und die beiden Servomotoren S gegebenenfalls sogar zwischen den Schwenkachsen 17 platziert werden können. Dieses Anordnungsprinzip der Servomotoren S könnte auch bei Direktantrieben gewählt werden.

In der Ausführungsform des Greifers G in Fig. 13 sind die beiden Greiferklauen 15, 16, die einen Preform P oder einen Behälter B in der Greifposition haltern (gezeigt ist eine Dreipunktlagerung mit Angriffspunkten P1, P2, P3, entweder am Gewinde der Mündung, oder am Sicherungsring oder am Tragring oder auch an der Außenwand eines Behälters B), wobei ein Zentrum Z des Preforms P oder Behälters B durch Betätigen der beiden Greiferklauen 15, 16 in derselben Richtung über unterschiedliche Schwenkwinkel α1, α2 relativ zur Halterung 14 und gegenüber der normalen Position (entsprechend Fig. 11 oder 12) zur Seite versetzt ist. Der Schwenkwinkel α1 ist größer als der Schwenkwinkel α2, um die Greifposition aufrecht zu halten, und auch die Greifkraft nicht zu verändern. Allerdings ist bei dieser Verlagerung das Zentrum Z des Preforms P oder Behälters B etwas näher zur Halterung 14 hin verlagert worden, als in der zentrischen Greifposition beispielsweise der Fig. 11 oder 12. Falls dies bei einer Übergabe zu einem Problem führen könnte, müssen andere Maßnahmen getroffen werden, um diese Annäherung zu kompensieren oder sogar zu überkompensieren, was später erläutert wird.

Fig. 14 zeigt einen Greifer G einer weiteren Ausführungsform, jedoch analog zu Fig. 13, wobei die Halterung 14 beispielsweise an einem Übergabearm A angeordnet ist, der mittels eines symbolisch angedeuteten Linearantriebs 30 in Richtung eines Doppelpfeils verstellbar ist, um die bei der individuellen und/oder separaten Betätigung der beiden Greiferklauen 16, 15 unter Beibehalt der Greifposition auftretende Annäherung des Zentrums Z an die Halterung 14 zu kompensieren oder sogar zu überkompensieren, das heißt, das Zentrum Z nach unten zu bewegen. Als Alternative oder additiv zu den Linearantrieb 30 kann auch ein Linearantrieb 30 für zumindest eine Greiferklaue, hier die Greiferklaue 16, vorgesehen sein, die in Längsrichtung teleskopierbar ausgebildet ist. Selbstverständlich können beide Greiferklauen 15, 16 teleskopierbar und mit Linearantrieben 30 ausgestattet sein. Für die Linearantriebe 30 bieten sich magnetische Antriebe M oder elektrische Servomotoren S an.

Der Greifer G in Fig. 15 ist beispielsweise an einem Übergabearm A angeordnet, der durch den Linearantrieb 30 die Halterung 14 in Richtung des Doppelpfeils (und gegebenenfalls sogar drehend) verstellen kann, um das Zentrum Z eines Preforms P oder Behälters B in eine Wunschposition zu bringen. Die in Fig. 15 nicht hervorgehobenen Antriebe oder ein gemeinsame Antrieb der Greiferklauen 15, 16 sind über eine Programmierung oder Einstellung der Steuerung des Greifers G für unterschiedliche Sorten von Preforms P oder Behältern B individuell einstellbar. So können abrufbar unterschiedlich weite Greifpositionen Greifkraftprofile und dergleichen bei einem Sortenwechsel über die Steuerung S ausgewählt werden.

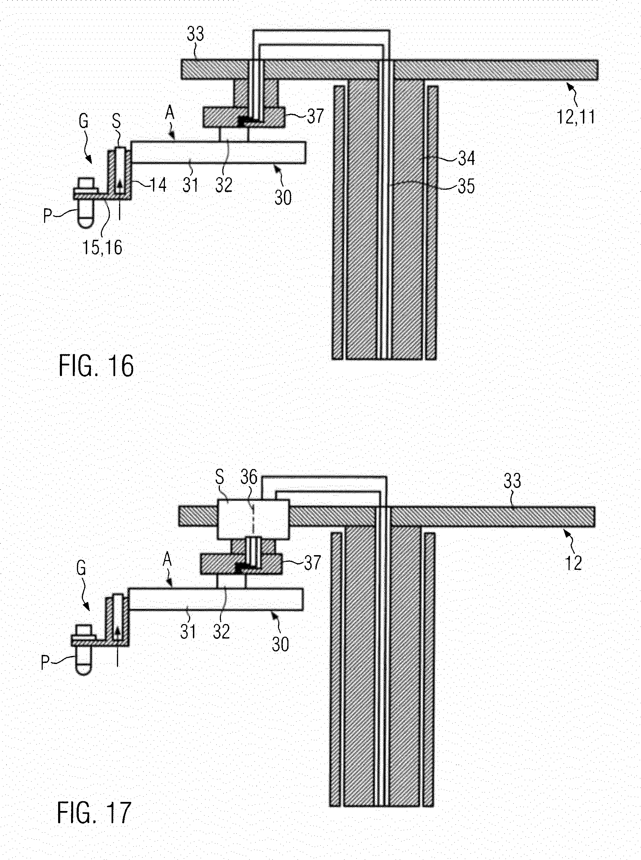

Fig. 16 verdeutlicht schematisch einen Übergabe- oder Transferstern 11, 12 mit einem Übergabearm A, der unterseitig stationär an einer drehbar angetriebenen Scheibe 33 montiert ist. Die Scheibe 33 sitzt auf einer drehangetriebenen Säule 34, in deren Inneren ein Kanal elektrische Versorgungsleitungen 35 für den wenigstens einen Servomotor S des Greifers G und den Linearantrieb 30 des Übergabearms A untergebracht sind. Der Linearantrieb 30 weist an einem hier stationären Träger 37 einen stationären Stator 32 sowie ein relativ zu diesem linear beweglichen Läufer 31 auf, an welchem die Halterung 14 des Greifers G montiert ist. Im Greifer G ist ein ergriffener Preform P angedeutet. Auf diese Weise könnte beispielsweise auch ein (wenn auch kleiner) Teilungsverzug durch gleichsinniges Verschwenken der Greiferklauen 15, 16 und Herausfahren des linear beweglichen Läufers 31 realisiert werden.

In der Ausführungsform eines Transfer- oder Übergabesterns 12 in Fig. 17 mit Teilungsverzugskompensation ist der Übergabearm A, der die Halterung 14 des Greifers G trägt, und den Linearantrieb 30 mit dem Läufer 31 und dem Stator 32 umfasst, an dem hier in der Scheibe 33 um die Achse 36 drehbaren Träger 37 montiert. Der Träger 37 wird beispielsweise durch einen Servomotor S elektrisch verdreht, um den Abstand zwischen den Preforms P in den Greifern G sowie deren Abstand von der Drehachse der Scheibe 33 nach Bedarf zu verändern. Zusätzlich kann der Preform P, wie auch in Fig. 16, analog beispielsweise zu Fig. 13 oder 14, relativ zur Halterung 14 durch individuelle und/oder separate Betätigung der Greiferklauen 15, 16 relativ zur Halterung unter Aufrechthalten der Greifposition umpositioniert werden.

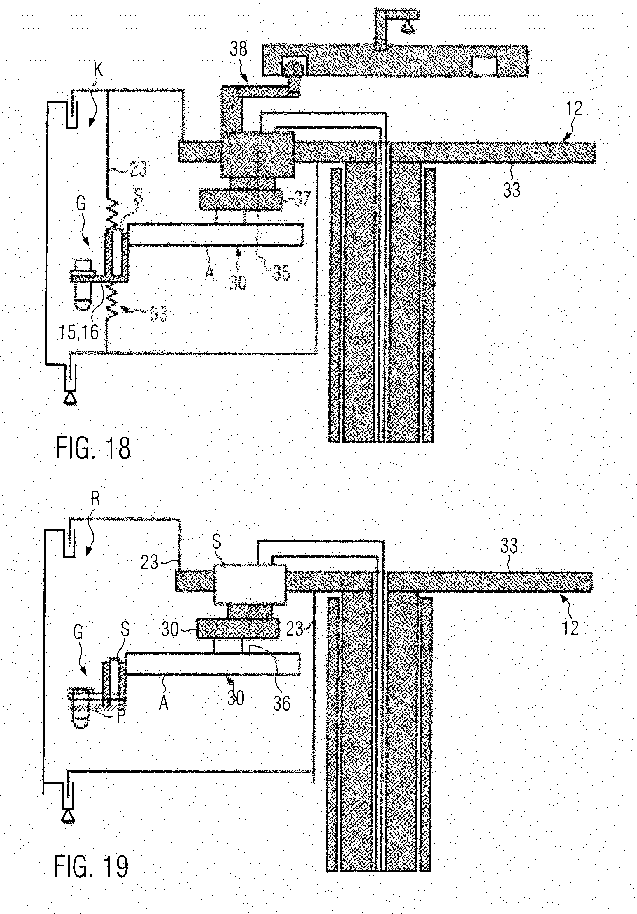

Fig. 18 deutet einen Übergabestern 12 mit Teilungsverzugskompensation in einer Hybridlösung und in Verbindung mit einem Reinraum R an. Der jeweilige Greifer G, beispielsweise für Preforms, sitzt an dem Übergabearm A mit dem Linearantrieb 30, wobei der Übergabearm A nur die Drehachse 36 mit dem drehbar in der Scheibe 33 angeordneten Träger 37 auch verschwenkbar ist. Hier ist eine konventionelle Kurvenbahnsteuerung 38 mit einer stationären Kurvenbahn angedeutet, die bei der Drehbewegung der Scheibe 33 die Drehung des Trägers 37 um die Achse 36 steuert, während der Übergabearm A den Abstand des Zentrums des gehaltenen Preforms von der Achse des Übergabesterns 12 verändern lässt, und auch die individuelle und/oder separate Betätigung der Greiferklauen 15, 16 Umpositionierungen des gehaltenen Preforms P unter Aufrechthalten der Greifposition ermöglichen. Der Reinraum R, in welchem sich die Greiferklauen 15, 16 bewegen, ist mit seiner Reinraum-Begrenzungswand 23 beispielsweise über Faltenbälge 63 am Greifer G abgedichtet, so dass die Kurvenbahnsteuerung 38 außerhalb platziert bleibt. Sämtliche Antriebe (Kurvenbahnsteuerung 38, Linearantrieb 30, Greiferantrieb) sind außerhalb des Reinraums R angeordnet.

Fig. 19 verdeutlicht eine Ausführungsform eines Übergabesterns 12 analog zu Fig. 17 ebenfalls in einem Reinraum R, wobei die Reinraum-Begrenzungswand 23 an der Scheibe 33 abgedichtet ist, so dass sich der Greifer G mit seinem Servomotor S und der Übergabearm A mit seinem Linearantrieb 30 und den Träger 37 mit einem Teil seines Servomotors S in dem Reinraum R befinden, was jedoch keinen Nachteil darstellt, da im Reinraum R keine hygienisch kritischen Kurvenbahnsteuerungen benötigt werden.

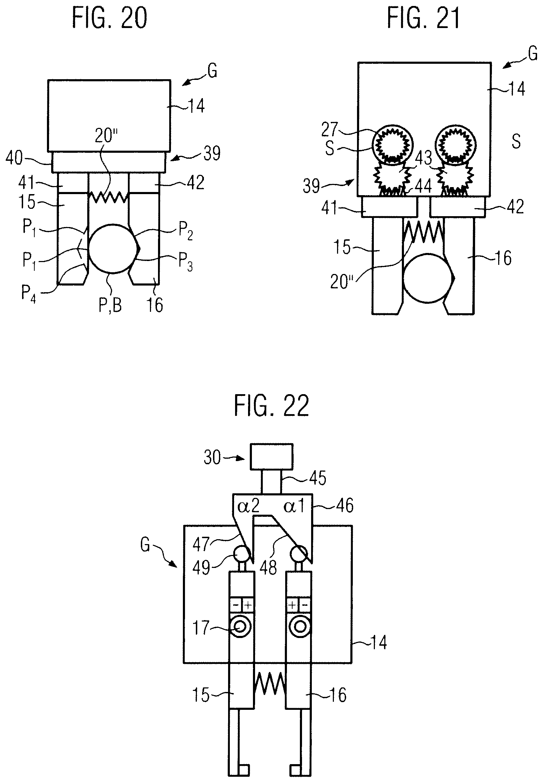

Fig. 20 verdeutlicht eine weitere Ausführungsform eines Greifers G, dessen hier beispielsweise zwei Greiferklauen 15, 16 parallel zu sich selbst und linear relativ zur Halterung 14 individuell und/oder separat betätigbar sind, und zwar entweder symmetrisch relativ zur Halterung 14 aufeinander zu oder voneinander weg, oder asymmetrisch im Bezug auf die Halterung 14 gemeinsam in der einen oder anderen linearen Richtung. An der Halterung 14 ist ein Linearantrieb 39, beispielsweise ein magnetischer oder mit einem Servomotor, angeordnet, der einen stationären Stator 40 und in diesem zwei Linear-Läufer 41, 42 umfasst, deren jeder eine Greiferklaue 15, 16 trägt. Gegebenenfalls ist eine Feder 20' (z.B. Zugfeder) vorgesehen, die die Greiferklauen 15, 16 in Schließrichtung beaufschlagt. Je nachdem, welches Verhalten bei einem Stromausfall gewünscht ist, könnte die Feder 20' eine Druckfeder sein, die in Öffnungsrichtung wirkt.

In ausgezogenen Linien definieren in Fig. 20 die Greiferklauen 15, 16 eine Dreipunkthalterung mit Punkten P1, P2, P3 für den Preform P oder Behälter B. Alternativ ist eine beispielsweise symmetrische Vierpunkthalterung mit vier Punkten P1 bis P4 angedeutet, die hier dank der linearen und parallelen Betätigbarkeit der Greiferklauen 15, 16 bei einer Verlagerung des Preforms P oder Behälters B seitlich relativ zur Halterung 14 daran keine Drehreibungskräfte erzeugt.

Die Halterung 14 kann, beispielsweise wie in Fig. 14, an einem Übergabearm A angebracht und durch einen Linearantrieb 30 verstellt werden. Alternativ könnten die beiden Greiferklauen 15, 16 in Längsrichtung teleskopierbar sein und jeweils eigene Linearantriebe zur Teleskopierung aufweisen, um das Zentrum des ergriffenen Preforms P oder Behälters B auch senkrecht zur Halterung 14 verlagern zu können.

Fig. 21 zeigt einen Greifer G mit zwei parallel zu sich selbst und linear verstellbaren Greiferklauen 15, 16 an Läufern 41, 42 des Linearantriebs 39, der hier zwei Servomotoren S mit Verzahnungen 27 und ein Zahnradgetriebe jeweils mit Zahnrädern 43 und einem Zahnstangenprofil 44 zum Betätigen der Läufer 41, 42 umfasst. Die Zahnräder 43 bzw. Verzahnungen 27, 44 können aus Kunststoff bestehen, selbstschmierend sein, und deshalb hygienisch auch in einer Reinraumatmosphäre benutzt werden. Die Zahnradgetriebe könnten eingekapselt sein. Auch eine Schließfeder 20" ist denkbar. Die beiden Greiferklauen 15, 16 können nicht nur symmetrisch zur Halterung 14 betätigt werden, sondern auch individuell und/oder separat voneinander.

Fig. 22 verdeutlicht eine andere Ausführungsform eines Greifers G mit zwei schwenkend um ihre Schwenkachsen 17 beweglich betätigbaren Greiferklauen 15, 16, einer mechanischen oder magnetischen Schließfeder, wobei an der Halterung 14 ein Linearantrieb 30, zum Beispiel mit einem Servomotor S, angeordnet ist, der über einen Aktuator 45 in Richtung des Doppelpfeils einen Doppelnocken 46 eines Nockenantriebs relativ zur Halterung 14 verstellt, um die beiden Greiferklauen 15, 16 individuell und/oder separat voneinander über unterschiedlich große Schwenkwinkel α1, α2 zu betätigen, wie es zum Aufrechthalten der Greifposition erforderlich ist. Der Doppelnocken 46 weist zwei Nockenflächen 47, 48 mit unterschiedlichen Steigungen (diese definieren die unterschiedlichen Schwenkwinkel α1, α2) auf, an denen Nockenfolgeglieder 49 hier an Greiferklauen-Verlängerungen angreifen.

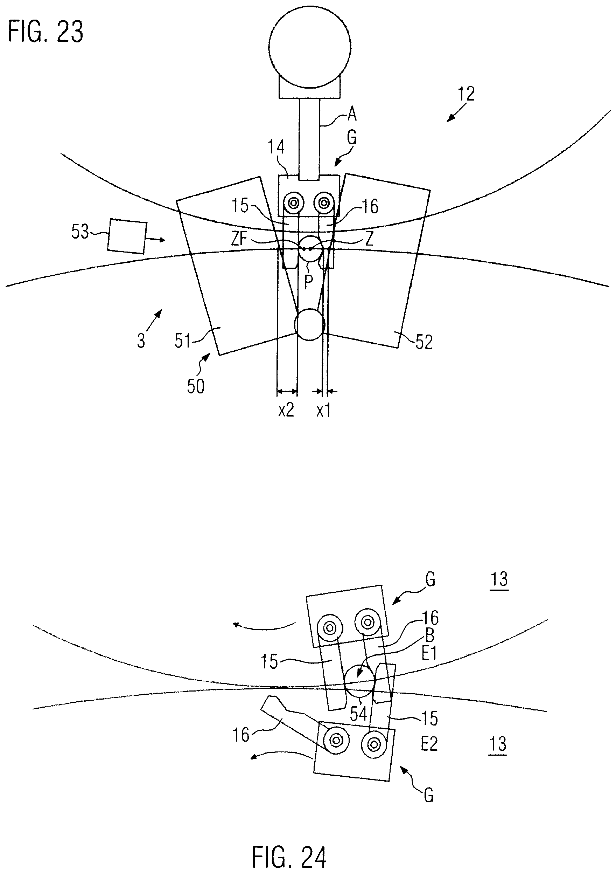

Fig. 23 zeigt beispielsweise unter Verwendung des Greifers G der Fig. 13 eine Übergabesituation zwischen einem Übergabestern mit Teilungsverzugs-Kompensation und einer Blasstation an einem Blasrad 3 mit einer gezeigten von mehreren geteilten Blasformen 50 vor der Übergabe eines in der Greifposition zwischen den Greiferklauen 15, 16 gehaltenen Preforms P. Die Aufgabe des Übergabesterns 12 besteht darin, das Zentrum Z des Preforms P zumindest über eine vorbestimmte Wegstrecke gleichlaufend mit einem Zentrum ZF der Blasform 50 zu transportieren, bis die Blasform geschlossen ist und den dann in der Blasform 50 positionierten Preform aus dem Greifer G zieht oder der Greifer durch Umstellen in die Freigabeposition diesen freigibt. Eine Sensoranordnung 53, beispielsweise eine Kamera oder ein Näherungsinitiator, greift, die Relativposition zwischen dem Zentrum Z des Preforms P und dem Zentrum ZF der Blasform 50 ab, oder die Abstände x1, x2 der Preformmündung von den Formhälften 51, 52. In der dargestellten Übergabesituation liegt ein Versatz (x1-x2) zwischen dem Zentrum Z und dem Zentrum ZF vor, das heißt, der Preform P liegt näher bei der Formhälfte 52 als bei der Formhälfte 51. Dies würde beim Schließen der Blasform 50 zu einem Wackeln oder Verlagern des Preforms P führen, das den ordnungsgemäßen Angriff einer nicht gezeigten Reckstange an dem Preformboden verwehren und die Qualität des geblasenen Behälters beeinträchtigen würde. Die Sensoranordnung 53 (oder eine Auswerteeinrichtung, nicht gezeigt) wertet die festgestellte Übergabesituation aus und liefert der nicht dargestellten Steuerung des oder der Antriebe des Greifers G ein Korrektursignal entsprechend einer festgestellten Abweichung zwischen Z und ZF. Durch individuelle und/oder separate Betätigung der Greiferklauen 15, 16 wird die Abweichung dann zumindest weitgehend kompensiert, so dass der Preform P ohne Wackeln in die Blasform so eingebracht wird und schließlich nach der Übergabe ordnungsgemäß im Zentrum ZF der Blasform 50 sitzt.

Die individuelle Betätigbarkeit der Greiferklauen 15, 16 lässt sich in Verbindung mit wenigstens einem Erkennungssensor zum Abtasten der Übergabesituation alternativ oder additiv allgemein dazu nutzen, auf eine versagensbedingte Fehlstellung einzelner Teile der Blasstation zur Schadensabkehr individuell zu reagieren. Für den Blasformvorgang wird an die Blasform 50 üblicherweise eine in Fig. 23 nicht gezeigte Blasdüse angesetzt, die nach dem Blasvorgang wieder angehoben wird. Die für den Blasformvorgang geschlossenen und verriegelten Blasformhälften 51, 52 müssen ferner nach dem Blasformvorgang entriegelt und wieder geöffnet werden. Ferner wird für den Blasformvorgang beim Streckblasen die Reckstange in die Blasform 50 eingeführt und anschließend wieder vollständig herausgezogen. Versagensbedingt kann die Blasdüse nicht ordnungsgemäß angehoben worden sein, oder sind die Formhälften nicht entriegelt und/oder nicht geöffnet worden, oder befindet sich die Reckstange zumindest noch zum Teil in der Blasform, wenn der Preform P eingebracht werden soll. Diese versagensbedingten Fehlstellungen von Teilen der Blasstation können durch den mindestens einen Erkennungssensor 53 ermittelt und ausgewertet und dann zur individuellen Betätigung der Greiferklauen 15, 16 umgesetzt werden, um einen Schaden zu vermeiden. Bei nicht angehobener Blasdüse und/oder nicht entriegelter oder nicht geöffneter Blasform oder nicht ordnungsgemäß herausgezogener Reckstange wird durch die individuelle Betätigung der Greiferklauen 15, 16 der gehaltene Preform P ausgeworfen und/oder werden die Greiferklauen weggeschwenkt, um eine Kollision des Preforms P und/oder der Greiferklauen 15, 16 mit den versagensbedingt fehlerhaft positionierten Teilen der Blasstation zu vermeiden.

Fig. 24 deutet eine Übergabesituation zwischen zwei mit Greifern G bestückten Transfersternen 13 an. Hierbei werden die jeweiligen Greiferklauen 15, 16 individuell und/oder separat betätigt, um eine saubere Übergabe durchzuführen, und dabei unerwünschte Reibkräfte am hier beispielsweise gezeigten Behälter B zu vermeiden. Und zwar wird beim unteren Greifer G (Übernahmegreifer) die in Transportrichtung voreilende Greiferklaue 16 in Öffnungsrichtung relativ zur Halterung 14 betätigt, während die nacheilende Greiferklaue 15 des unteren Greifers G schon mit der Übernahme befasst ist. Anschließend wird die ausgeschwenkte Greiferklaue 16 des unteren Greifers G zurück zur Greifposition geschwenkt, während gegebenenfalls die voreilende Greiferklaue 15 des oberen Greifers G (Übergabegreifer) in die Freigabeposition verschwenkt wird, oder beide Greiferklauen 15, 16 des oberen Greifers G in ihre Freigabepositionen verschwenkt werden. Insbesondere kann so mindestens eine Greiferklaue 15, 16 des unteren Greifers G kraftgesteuert betätigt werden, um eine schonende Übergabe/Übernahme zu gewährleisten. Die Greifkraft der Greiferklauen 15, 16 des unteren Greifers G wird dabei zuerst sehr schwach eingestellt, und nimmt im Bereich des Tangentenpunkts der Bewegungsbahnen der jeweils zwei Greifer G zu, bis schließlich die gewünschte Greifkraft zum endgültigen Abtransport des Behälters B vom oberen Greifer G weg erreicht ist.

Zu Fig. 24 ist anzumerken, dass die Umlaufbahnen der Greiferklauen 15, 16 der zusammenwirkenden Greifer G in Höhenrichtung zueinander versetzt sind (Ebenen E1, E2), so dass beispielsweise die Greiferklauen 15, 16 des oberen Greifers an der Oberseite eines Tragrings oder Sicherungsrings des Behälters B angreifen, während die Greiferklauen 15, 16 des unteren Greifers an der Unterseite des Tragrings oder Sicherungsrings angreifen. Über die individuelle und/oder separate Betätigung der jeweiligen Greiferklauen wird so eine außerordentlich schonende Übergabe bewerkstelligt, auch in einem Fall, in welchem der Behälter B nicht an der Mündung sondern am Außenumfang gegriffen ist.

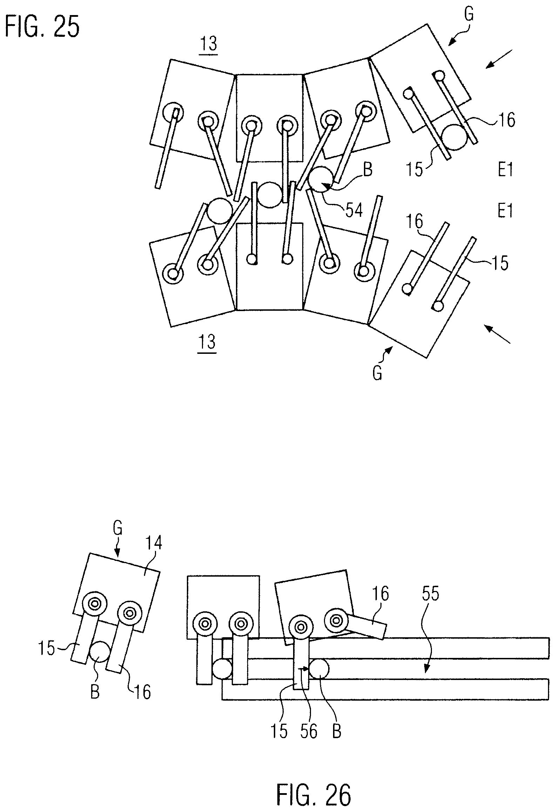

Fig. 25 verdeutlicht eine Übergabesituation für einen Behälter B zwischen zwei Greifern G beispielsweise zweier Transfersterne 13. Die beiden Greifer G sind in Momentaufnahmen mehrfach dargestellt. In Realität sind aufeinanderfolgende Greifer G jedes Transfersterns 13 insbesondere weiter beabstandet als gezeigt. Durch die individuelle und/oder separate Betätigung der Greiferklauen 15, 16 jedes Greifers G wird auch eine für den Behälter B schonende Übergabe vollzogen, das heißt, es werden aus den unterschiedlichen Kreisbahnen der Bewegungen der Greifer G resultierende Deformationen und/oder Reibbelastungen verringert. Die Greiferklauen 15, 16 beider Greifer G (Übergabe- und Übernahme-Greifer) bewegen sich in einer gemeinsamen Laufebene E1, d.h., sie greifen in der Laufebene E1 am Außenumfang des Behälters B oder am Tragring bzw. Sicherungsring an.

Einem aktuellen Trend folgend werden oft Behälter B mit sehr kurzem Gewinde 54 und gegebenenfalls ohne Tragring blasgeformt (auch Glasflaschen), wobei mit dem Gewinde bzw. einem gegebenenfalls vorgesehenen Sicherungsring sehr vorsichtig umzugehen ist. Der in Fig. 25 von rechts oben kommende Übergabegreifer G schwenkt seine beiden Greiferklauen 15, 16 in der zweiten Darstellung von rechts unter Aufrechthalten der Greifposition über unterschiedliche Schwenkwinkel in Transportrichtung voreilend vorwärts, bis die voreilende Greiferklaue 15 das Ende der voreilenden Greiferklaue 16 des Übernahmegreifers G passiert hat, die dazu ebenfalls in Transporteinrichtung voreilend asymmetrisch in die Freigabeposition oder über diese hinaus verschwenkt ist, bis ein Anfangskontakt mit dem Gewinde 54 oder dem Sicherungsring hergestellt ist. Die nacheilende Greiferklaue 15 des Übernahmegreifers G steht noch in Greifposition und wird, dritte Darstellung von rechts, nach Passieren der nacheilenden Greiferklaue 16 des Übergabegreifers G individuell geringfügig entgegen der Transportrichtung nacheilend verschwenkt, während die nacheilende Greiferklaue 16 des Übergabegreifers G individuell entgegen der Transportrichtung geschwenkt wird, so dass der Behälter B zwischen der voreilenden Greiferklaue 16, die ebenfalls entgegen der Transportrichtung zurückgeschwenkt wird, und der entgegen der Transportrichtung zurückgeschwenkten Greiferklaue 16 des Übergabegreifers G gehalten ist. In der Abfolge (vierte Darstellung von rechts) wird die nacheilende Greiferklaue 16 des Übergabegreifers G entgegengesetzt zur Transportrichtung weiter individuell verschwenkt und vom Behälter B abgezogen, der mittlerweile zwischen der individuell entgegen der Transportrichtung über die Greifposition hinaus verschwenkten Greiferklaue 16 und der ebenfalls entgegen der Transportrichtung weiter individuell verschwenkten nacheilenden Greiferklaue 15 des Übernahmegreifers G gehalten ist. Die nacheilende Greiferklaue 16 des Übergabegreifers G hat sich bereits vom Behälter gelöst, wenn beide Greiferklauen 15, 16 der Übernahmegreifers G unter Beibehalt der Greifposition und über unterschiedliche Schwenkwinkel schließlich in die in der ersten Darstellung von rechts gezeigte normale Greifposition betätigt sind und den ergriffenen Behälter B weitertransportieren.

Bei einem Transportstreckensystem mit einem mäanderförmigen Transportweg für Behältnisse (Preforms P, Behälter B) und einer Übergabe der Behältnisse von einem Transportkarussell bzw. Übergabestern mit mehreren am Außenumfang angeordneten Greifern G an ein im Wesentlichen gleichartiges Transportkarussell oder einen Übergabestern, aber auch bei anderen Transportstreckensystemen, kann vom Prinzip der im Stand der Technik üblichen, punktförmigen Übergabe abgegangen werden, und kann die Übergabe des Behältnisses auf einen Bereich ausgedehnt werden, der insbesondere mehr als 3°, bevorzugt sogar mehr als 6°, einer Umdrehung eines rundlaufenden Übergabesterns beträgt. Bei üblichen Übergabesterndurchmessern ergeben sich somit Übergabebereiche von mehr als 2,5 cm, bevorzugt mehr als sogar etwa 5,0 cm Länge. Der Übergabebereich kann dank der individuellen Betätigbarkeit der Greiferklauen 15, 16 sogar auf mehr als etwa 10,0 cm eingestellt werden. Insbesondere werden bei der Übergabe beide Greiferklauen 15, 16 des Übergabegreifers G am Übergabestern gleichsinnig in eine Richtung (in Transportrichtung vorlaufend oder nacheilend) verschwenkt. Zweckmäßig kann es bei der verlängerten Übergabe/Übernahme zum zeitweisen Abrollen des Behälters oder Preforms zwischen der nacheilenden Greiferklaue des Übergabegreifers und der voreilenden Greiferklaue des Übernahmegreifers kommen. Günstig kann sich dabei das Behältnis an mindestens einem Zeitpunkt innerhalb des ausgedehnten Übergabebereiches in Kontakt mit nur einer Greiferklaue des Übergabegreifers und einer Greiferklaue des Übernahmegreifers befinden.

Speziell bei der Übergabe in einer gemeinsamen Laufebene E1 in Fig. 25 wird insbesondere mindestens eine Greiferklaue (insbesondere die in Transportrichtung voreilende beim voreilenden Schwenken der Greiferklauen des Übergabegreifers in Transportrichtung oder die in Transportrichtung nacheilende Greiferklaue beim Verschwenken der Greiferklauen des Übergabegreifers gegen die Transportrichtung) des Übernahmegreifers derart positioniert, dass diese Greiferklaue mit ihrer in Greifrichtung gesehenen inneren Fläche oder dem Greifbereich zwischen den Greiferklauen des Übergabegreifers in Kontakt mit dem Behältnis kommt. Da eine ordnungsgemäße Halterung des Behältnisses durch eine Greiferklaue des Übergabegreifers und eine Greiferklaue des Übernahmegreifers gewährleistet ist, kann die zweite Greiferklaue des Übergabegreifers weggeschwenkt werden. Durch gleichsinniges Verschwenken der das Behältnis haltenden Greiferklauen wird so Platz für die dann in Kontakt mit dem Behältnis zu bringende andere Greiferklaue des Übernahmegreifers geschaffen, bis letztendlich beide Greiferklauen des Übernahmegreifers ausschließlich in Kontakt mit dem Behältnis sind.

Fig. 26 deutet eine Übergabesituation zwischen einem Greifer G beispielsweise eines Übergabesterns, der um eine Achse rotiert, und einer Lufttransportvorrichtung 55 für abzutransportierende Behälter B an. Die in der normalen Greifposition befindlichen Greiferklauen 15, 16 an der Halterung 14 führen den Behälter B in die Lufttransportvorrichtung 55 ein, wobei zunächst die Greifposition aufrecht gehalten wird, bis nicht dargestellte Luftdüsen bestrebt sind, den Behälter zu beschleunigen, und zwar in Fig. 26 linear nach rechts. Aufgrund der Bogenbewegung des Greifers G wird zunächst die voreilende Greiferklaue 16 in der zweiten Darstellung von links in die Freigabeposition oder sogar über diese hinaus verschwenkt (dritte Darstellung von links) während gleichzeitig die nacheilende Greiferklaue 15 nach wie vor den Behälter B hintergreift und diesen (Pfeil 56) in der Lufttransportvorrichtung 55 beschleunigt. Dabei wird bei der Weiterbewegung des Greifers G die nacheilende Greiferklaue 15 weiter individuell in Öffnungsbewegungsrichtung verstellt, vorzugsweise derart, dass die nacheilende Greiferklaue 15 zumindest weitgehend senkrecht zur linearen Beschleunigungsrichtung des Behälters B diesen hintergreift und beschleunigt, bis sich schließlich die nacheilende Greiferklaue 15 unter Beibehalt der Orientierung senkrecht zur linearen Bewegungsrichtung in der Lufttransportvorrichtung 55 vom mittlerweile beschleunigten Behälter B nach oben bewegt. Dabei kann, z.B. an der Greiferklaue 15, ein zusätzliches Kontaktelement (nicht gezeigt) vorgesehen sein, das während der Beschleunigung am Behälter B, z.B. bei dessen Schwerpunkt oder darüber bzw. darunter, angreift, um diesen zu stabilisieren. Dies kann zweckmäßig sein, wenn der Behälter B vom Greifer G im Mündungsbereich gehalten ist.

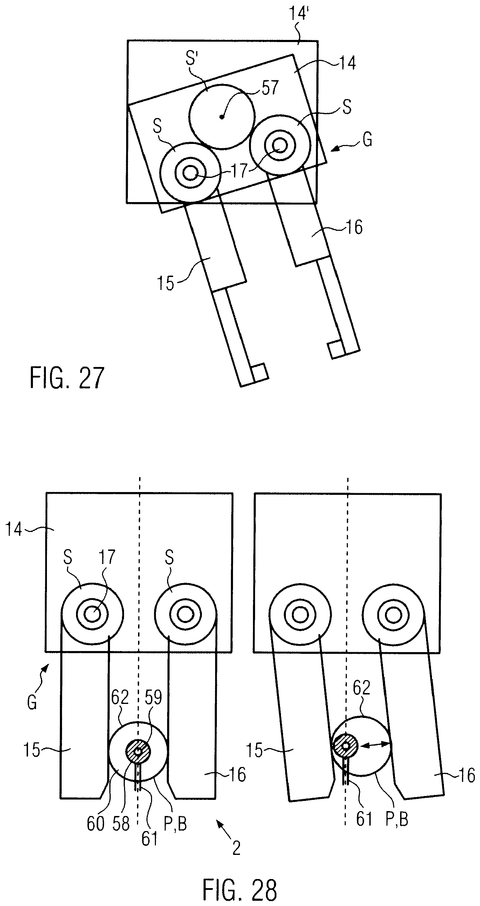

Fig. 27 zeigt in Draufsicht eine weitere Ausführungsform eines Greifers G, dessen zwei schwenkend um ihre Schwenkachsen 17 bewegbare Greiferklauen 15, 16 jeweils über eigene Servomotoren S individuell und/oder separat relativ zur Halterung 14 betätigbar sind. Die Halterung 14 ist an einem Halterungsträger 14', zum Beispiel einer Tragplatte oder einem Übergabearm A, um ein Drehzentrum 57 drehbar gelagert und mittels eines an der Halterung 14 oder dem Halterungsträger 14' installierten Servomotors S' verdrehbar. Der Servomotor S verleiht dem Greifer G einen weitere individuellen Verstellbewegungs-Freiheitsgrad.

Fig. 28 zeigt in zwei nebeneinanderliegenden Darstellungen einen Greifer G, der beispielsweise in einem nicht hervorgehobenen Transportstern eines Sterilisierers oder Rinsers 2 einen Prefom P oder Behälter B während eines Zyklus auf eine Einlassdüse 58 ausrichtet, die aus einer Düsenöffnung 59 ein Sterilisier- oder Rinsmittel, z.B. gasförmiges Wasserstoffperoxid, unter Druck ins Innere appliziert. In der linken Darstellung in Fig. 28 ist ein zwischen den in der normalen Greifposition befindlichen Greiferklauen 15, 16 gehaltenes Mundstück 60 mit seinem Mündungsrand 62 zentrisch auf die Einlassdüse 58 ausgerichtet. Dabei wird, gegebenenfalls, der Mündungsrand 62 an wenigstens einen zum Beispiel die Einlassdüse 58 halternden Anlagesteg 61 angelegt. Durch individuelle und/oder separate Betätigung der beiden Greiferklauen 15, 16 unter Beibehalt der Greifposition, beispielsweise über ihre eigenen Servomotoren S an der Halterung 14, wird der Mündungsrand 62 relativ zur Halterung 14 gemäß der rechten Darstellung relativ zur Einlassdüse 58, vorzugsweise mehrfach, verlagert, damit das Mittel intensiver auf alle Bereiche der Innenwand appliziert werden kann, und, falls ein Anlagesteg 61 vorgesehen ist, auch der von diesem abgedeckte Abschnitt des Mündungsrandes 62 ordnungsgemäß behandelt Falls die Greiferklauen 15, 16 in Längsrichtung teleskopierbar sind, kann sogar eine eiernde Bewegung des Mündungsrandes 62 bewerkstelligt werden. Alternativ könnte zusätzlich auch die Einlassdüse 58 zum Beispiel mittels eines Servomotors bewegt werden. Die Greiferklauen 15, 16 könnten sogar vorübergehend gelockert werden, um das Mittel auch auf Greiferklauen-Kontaktstellen applizieren zu können. Hierbei könnte der Behälter B vorübergehend von wenigstens einem anderen Kontaktelement (nicht gezeigt) gehalten und/oder sogar gedreht werden.

Falls beispielsweise in Fig. 28 oberhalb der Einlassdüse 58 eine Umlenkglocke (nicht gezeigt) vorgesehen sein sollte, mit der wieder aus dem Inneren des behandelten Preforms P oder Behälters B austretendes Mittel umgelenkt und auch auf das Gewinde an der Außenseite der Mündung 60 appliziert wird, lässt sich durch die Positionsänderungen des Öffnungsrandes 62 relativ zur Einlassdüse 58 auch dieser Bereich intensiver behandeln.

Zweckmäßig sind die Servomotoren S der Greiferklauen 15, 16 eingekapselt. Die Stromversorgung der Servomotoren S oder der magnetischen Antriebe M der Greiferklauen 15, 16 wird beispielsweise über Schleifringverbindungen oder dergleichen bewerkstelligt (nicht gezeigt).

Die Fig. 29 und 30 zeigen zwei nicht beschränkende Beispiele von Preform-Preferential-Heating-Prozessen zur Herstellung unrunder Behälter mit trotz der Unrundheit gleichmäßigen oder verschiedenen Wandstärken durch Blasformen oder Streckblasformen des Preforms P in einer nicht gezeigten Blasform- oder Streckblasmaschine. Theoretisch ist dieser Prozess auch geeignet, runde Behälter mit variierendem Wanddickenprofil herzustellen.

Der Preform-Preferential-Heating-Prozess wird beispielsweise in dem in Fig. 1 gezeigten Zwischenmodul 2 ausgeführt, durch welchen die Preforms P in Mündungsbereich von Aufnahmedornen D oder Innengreifern transportiert und dabei mit als Greiferklauen 15a, 15b, 16a eines für den Transport und die Positionierung der Preforms jeweils mitverantwortlichen Greifers G fungierenden, schalenförmigen Kontaktelementen in verformenden und/oder quetschenden Kontakt gebracht werden. Der Preform P hat zuvor bereits ein beispielsweise in Umfangsrichtung gleichmäßiges Temperaturprofil erhalten. Die Kontaktelemente entziehen Wärme und/oder führen lokal Wärme zu und deformieren den zunächst weitgehend runden Preform zeitweise im Hinblick auf die gewünschte unrunde Behälterform und/oder lokal unterschiedliche Wandstärken in der Seitenwand und/oder im Bodenbereich. Dieses Verfahren ist an sich bekannt, bisher jedoch mit dem gravierenden Nachteil behaftet, dass die Kontaktelemente beispielsweise aufgrund des Einsatzes von Kurvensteuerungen stets gleichartig greifen, keine individuelle Regelung der Deformation und/oder Quetschung zulassen, und Ursache für eine verhältnismäßig hohe Ausschussrate sein können.

In den Fig. 29 und 30 wird zumindest ein als Greiferklaue 15a, 16a, 15b eines Greifers G fungierendes Kontaktelement durch einen magnetischen oder elektrischen Antrieb S, M, vorzugsweise einem Servomotor S, individuell betätigt. Hierbei kann nur ein einzelnes Kontaktelement relativ zu wenigstens einem weiteren oder können mehrere oder alle Kontaktelemente individuell betätigt werden. Der Magnetantrieb M oder Servomotor S kann eine drehende Betätigung oder eine lineare Betätigung des Kontaktelementes regeln, vorzugsweise weg- und/oder kraftgesteuert oder kombiniert weg- und kraftgesteuert, wobei, vorzugsweise, auch die Kontaktzeit individuell gewählt werden kann. Dank der individuellen Betätigung zumindest eines Kontaktelementes dieses Greifers kann die Ausschussquote fehlerhaft behandelter Preforms bzw. fehlerhafter Behälter erheblich verringert werden.

In Fig. 29 (zwei einander zugeordnete Schnittdarstellungen) wird der am Aufnahmedorn D gehaltene Preform P zur Herstellung eines ovalen Preforms für einen ovalen Behälter zwischen zwei einander diametral gegenüberliegenden Kontaktelementen als Greiferklauen 15a, 16a gequetscht und am Aufnahmedorn D positioniert, wobei die Betätigung der Kontaktelemente beispielsweise geregelt wird über einen Erkennungssensor 53', der vor oder nach dem Preferential-Heating-Prozess die Temperaturen innen und/oder außen am Preform P abgreift und entsprechende Signale an die Steuerung für den jeweiligen Magnetantrieb M oder Servomotor S übermittelt. Als dritte Greiferklaue 15b ist in Fig. 29 ein Kontaktelement zum Temperieren der unteren Preform-Kuppe im Hinblick auf eine bestimmte Bodenausbildung des späteren Behälters vorgesehen, das beispielsweise durch einen linearen Magnetantrieb oder Servomotor angehoben oder abgesenkt wird und Teil des Greifers G ist. Die Kontaktelemente werden zugestellt und deformieren den Preform P auf vorbestimmte und beispielsweise über den Erkennungssensor 53' geregelte Weise, wobei sie den Preform P auch in Bezug auf den Aufnahmedorn D ordnungsgemäß zentriert behandeln. Ebenfalls ist eine in den Fig. 29 und 30 nicht gezeigte Positionierung des Sensors 53' im Inneren des Preforms P zweckmäßig

Fig. 30 (drei einander zugeordnete schematische Schnittdarstellungen) verdeutlicht einen Preform-Preferential-Heating-Prozess zum Temperieren des Preforms P zur späteren Herstellung eines annähernd viereckigen Behälters, wobei der Preform P eine spezielle Wandstärkenverteilung (hier beispielsweise drei unterschiedliche Wandstärkenbereiche) und eine spezielle Bodenausbildung (beispielsweise einen Petaloid-Boden) erhält, der an Zugbändern verstärkt ist.

In Fig. 30 sind vier seitliche Kontaktelemente als Greiferklauen 15a, 16a in regelmäßiger sternförmiger Verteilung vorgesehen, die entweder linear oder schwenkend betätigt werden, wobei zumindest ein Kontaktelement einen eigenen Magnetantrieb M oder Servomotor S aufweist, gegebenenfalls mehrere Kontaktelemente, oder sogar alle. Ferner ist als vierte Greiferklaue 15b ein unteres Kontaktelement vorgesehen, das aus mehreren relativ zueinander beweglichen Teilen besteht und beispielsweise drei Individualantriebe (Servomotoren, Magnetantriebe) aufweist, um die untere Kuppe des Preforms P geregelt zu behandeln. Auch hier kann zur Regelung des Kontaktes der Kontaktelemente mit dem Preform P wenigstens ein Erkennungssensor 53' (siehe Fig. 29) eingesetzt werden.

Beispielsweise wird in Fig. 30 die rechte Greiferklaue 16a bzw. das diese darstellende Kontaktelement mit höherer Zustellkraft (Pfeil) in Kontakt gebracht, als die anderen, beispielsweise um besonders viel Wärme zu entziehen und die Wandstärke im Kontaktbereich mit einem maximalen Ausmaß einzustellen. Ähnlich können die einzelnen Teile der unteren Greiferklaue 15b bzw. die Teile dieses Kontaktelementes individuell verstellt werden, um in einem zu blasformenden Petaloid-Boden verstärkte Zugbänder zu erzeugen. Die Magnetantriebe M oder Servomotoren S können als Direktantriebe ausgebildet werden, oder über Getriebeverbindungen auf die Kontaktelemente einwirken. Der Erkennungssensor 53' ist zweckmäßig ein sogenannter Pyrometer. Die Kontaktelemente des Greifers G können bis zur Abgabe des temperierten Preforms P aus dem Zwischenmodul 2 im Eingriff bleiben, oder bereits kurz vorher aus ihrem Eingriff gelöst sein, wobei sie, vorzugsweise, zuvor den temperierten Preform P im Bereich seines durch den Preferential-Heating-Prozess behandelten Hauptkörpers ordnungsgemäß in Ausrichtung auf den vom Aufnahmedorn D oder Innengreifer gehaltenen Mündungsbereich zentriert haben, um insgesamt durch den geregelten Preferential-Heating-Prozess und die ausgeführte Zentrierung die Ausschussquote an Preforms bzw. Behältern zu minimieren. Die Kontaktelemente können während des Preferential-Heating-Prozesses gekühlt und/oder beheizt werden.

Bei einer weiteren zweckmäßigen Ausführungsform sind die Greiferklauen von jeweils eigenen Antrieben an der Halterung auch in die definierte Greifposition und/oder Freigabeposition sowie gegebenenfalls jeweils darüber hinaus betätigbar. Dies kann weggesteuert und/oder kraftgesteuert erfolgen, um die Haltekraft individuell anpassen zu können, bzw. die Öffnungs- und/oder Schließbewegungsgeschwindigkeiten bzw. die jeweiligen Bewegungshübe. Vorzugsweise erfolgt jedoch die Betätigung jeder Greiferklaue gegen wenigstens einen die Greiferklauen z. B. zur Greifposition beaufschlagenden Kraftspeicher wie eine mechanische, magnetische oder Kunststoff-Feder, die beispielsweise eine bestimmte Grundhaltekraft bestimmt, die sich durch die eigenen Antriebe der Greiferklauen jedoch noch individuell regeln oder anpassen lässt. Dieser eigentlich ungesteuerte, jedoch durch die eigenen Antriebe der Greiferklauen zumindest zeitweise gesteuerte Greifer ist ein besonders individuelles Werkzeug zum Beherrschen betriebsbedingter Probleme in der Behälterbehandlungsmaschine bei der Übernahme, Abgabe und beim Transport eines Preforms oder Behälters. Insbesondere ist auch an eine Betätigung von Greiferklauen gedacht, die durch einen Permanentmagneten oder eine Feder in einer Öffnungsstellung gehalten werden und erst durch die Betätigung des Behälters greifen, oder umgekehrt.

Bei einer weiteren Ausführungsform der Behälterbehandlungsmaschine sind die Greiferklauen des Greifers parallel zu sich selbst und linear betätigbar. Hierbei wird als Antrieb ein Linearmotor vorgesehen, dessen an der Halterung angeordneter Stator zwei jeweils eine Greiferklaue betätigende Linear-Läufer umfasst. Dies schließt jedoch nicht aus, für jede Greiferklaue einen eigenen Linearmotor vorzusehen.

Bei einer weiteren zweckmäßigen Ausführungsform einer Behälterbehandlungsmaschine sind in einem Übergabebereich von einer Transportstrecke zu einer anderen die Greiferklauen eines Greifers in einer Laufebene angeordnet, die in Hochrichtung bzw. vertikal gegenüber der Laufebene der Greiferklauen eines Greifers der anderen Transportstrecke versetzt ist. Die Greiferklauen des einen Greifers greifen beispielsweise an der Oberseite eines Tragrings oder Sicherungsrings im Mündungsbereich des Preforms oder Behälters an, während die Greiferklauen des anderen Greifers der anderen Transportstrecke an der Unterseite des Tragrings oder Sicherungsrings angreifen, während die Übergabe vollzogen wird. Damit bei der Übergabe keine Deformationen hervorrufenden Kräfte von den Greiferklauen ausgeübt werden bzw. keine aus den relativen Drehbewegungen resultierenden übergroßen Reibbelastungen, wird bei der Übergabe zumindest eine Greiferklaue, vorzugsweise eine in Transportrichtung voreilende Greiferklaue, jeweils eines Greifers individuell in Öffnungsrichtung eine Passivposition betätigt, die eine Drehreibung am Preform oder Behälter bei der Übergabe ausschließt. Diese individuelle Betätigbarkeit der Greiferklauen zumindest des Greifers in einer der beiden Transportstrecken wird somit genutzt, um die Qualität des Endproduktes zu steigern. Diese Betätigung der zumindest einen Greiferklaue relativ zur Halterung wird zweckmäßig planmäßig bei jeder Übergabe ausgeführt, hat aber auf die ordnungsgemäße Positionierung des Preforms oder Behälters bei der Übergabe keinen nachteiligen Effekt, weil stets zumindest zwei weitere Greiferklauen oder sogar drei Greiferklauen in Eingriff bleiben.

Bei einer weiteren Ausführungsform der Behälterbehandlungsmaschine ist in einem Übergabebereich von einer mit Greifer bestückten Transportstrecke eines Übergabesterns in eine in etwa zum Übergabestern tangentiale Lufttransportvorrichtung, insbesondere für blasgeformte Behälter, die jeweils in Transportrichtung nacheilende Greiferklaue des Greifers individuell und unabhängig von der voreilenden Greiferklaue in eine den Behälter in der Lufttransportvorrichtung hintergreifende, und zumindest in etwa zur Transportrichtung in der Lufttransportvorrichtung senkrechte Beschleunigungsposition betätigbar, und nachfolgend bei der Bogenbewegung der Halterung mit dem Übergabestern in dieser Beschleunigungsposition haltbar. Solche in Behälterbehandlungsanlagen üblichen Lufttransportvorrichtungen zeigen in der Praxis dahingehend Probleme, dass die übergebenen Behälter nicht schnell genug beschleunigt werden (durch Luftstrahlen in Transportrichtung), so dass es zu einem einen Eingriff des Personals erfordernden Behälterstau kommt. Die individuelle Betätigbarkeit der Greiferklauen ermöglicht es nun, nachfolgend zur Übergabe für die ordnungsgemäße Beschleunigung des Behälters durch die ihn hintergreifende Greiferklaue zu sorgen, so dass Stausituationen zuverlässig vermieden werden und die Behälter in vorbestimmten Abständen abtransportiert werden. Der Greifer erfüllt hiermit eine Zusatzfunktion, in dem er nicht nur den Transport und die Übergabe des Behälters ausführt, sondern diesen vorsorglich oder nachdrücklich nach der Übergabe auch noch beschleunigt. Insbesondere könnte hierbei auf der Seite der den Behälter beschleunigenden Greiferklaue ein zusätzliches Element angebracht werden, z.B. an der Greiferklaue, welches den Behälter an einer zweiten höheren oder tieferen Stelle berührt, um beim Beschleunigen eine vertikale Ausrichtung des Behälters zu gewährleisten. Das weitere Element kontaktiert den Behälter z.B. in der Nähe seines Schwerpunktes oder weiter unten, während die beschleunigende Greiferklaue den Behälter weiter oben, z.B. am Hals, kontaktiert, wo sie ihn bis zur Übergabe gehalten hatte.

Bei einem anderen Verfahren zur Abgabe eines Preforms in eine geteilte Blasform wird bei Annäherung des in der Greifposition im Greifer gehaltenen Preforms an die geöffnete Blasform vor der Abgabe die relative Position z.B. der Reckstange oder Blasdüse gegenüber der geöffneten Blasform über wenigstens einen Erkennungssensor ermittelt und hinsichtlich einer versagensbedingten Anwesenheit der Blasdüse an oder der Reckstange oder eines Teils der Reckstange in der geöffneten Blasform ausgewertet. Bei positivem Auswertungsergebnis werden über eine entsprechend informierte Steuerung für den wenigstens einen Antrieb an der Halterung des Greifers die Greiferklauen des Greifers z.B. in die Freigabestellung betätigt, so dass der Preform vor seiner Kollision mit der Reckstange oder Blasdüse abgeworfen wird, und werden nachfolgend gegebenenfalls sogar die Greiferklauen bis zumindest zum Schließen der Blasform bewusst in der kollisionssicheren Freigabestellung oder noch weiter geöffnet gehalten, um eine Kollision zwischen den Greiferklauen und der Reckstange und/oder Blasdüse und/oder der Blasform zuverlässig auszuschließen. Der wenigstens eine Erkennungssensor greift somit nur bei Bedarf in den normalen Betriebsablauf ein, um unter Nutzen der individuellen Greiferklauen-Betätigbarkeit eine nachteilige Konsequenz einer versagensbedingten Anwesenheit der Reckstange und/oder Blasdüse in der geöffneten Blasform oder dgl. auszuschließen. Das Betätigungsprinzip der Greiferklauen lässt sich somit auch auf ein fehlerhaftes Nicht-Anheben einer Blasdüse oder das Nicht-Entriegeln oder Nicht-Öffnen der Formhälften einer geteilten Blasform übertragen. Allgemein wird eine Fehlstellung einzelner Teile einer Blasstation z.B. sensorisch ermittelt und für oder durch die Steuerung ausgewertet bzw. beurteilt, und wird nachfolgend durch Auswerfen des Preforms und/oder Wegschwenken der Greiferklauen eine Kollision des Preforms oder der Greiferklauen mit Teilen der Blasstation wie der Blasform, der Blasdüse oder der Reckstange vermieden.

Bei einem anderen Verfahren zum Wärmebehandeln eines Preforms in einem Preferential Heating-Modus wird der Kontakt des Preforms mit den dann als Greiferklauen eines Greifers fungierenden Kontaktelementen durch Ansteuerung wenigstens eines an der Halterung oder Halteteilen der Kontaktelemente angeordneten elektrischen oder magnetischen Antriebs für wenigstens ein Kontaktelement, vorzugsweise mit einem regelbaren Servomotor, über individuelle und/oder separate Betätigung der als Greiferklauen fungierenden Kontaktelemente unter Aufrechthaltung der Greifposition, vorzugsweise unter Berücksichtung eines Sensorsignals wenigstens eines die Temperaturen am Preform innen und/oder außen abgreifenden Sensors geregelt. Dabei wird zweckmäßig eine wegabhängige und/oder kraftabhängige Betätigung wenigstens eines der Kontaktelemente vorgenommen, unter Anpassung an die Sorte des Behälters oder Preforms und/oder die benötigte individuelle Deformation oder Quetschung. Auf diese Weise lässt sich nicht nur das Ausmaß der funktionsnotwendigen Quetschung feinfühlig regeln, sondern auch die aus dem Kontakt mit dem Kontaktelement resultierende Reaktionskraft im Mündungsbereich des am Aufnahmedorn oder Innengreifer gehaltenen Preforms. Es kann jedes Kontaktelement individuell und/oder separat betätigt werden. Die einzelnen Kontaktelemente können auch - insbesondere die jeweils auf einer Seite des Preforms liegenden, jeweiligen Teile des Kontaktierungselementes - einteilig ausgebildet sein bzw. über einen gemeinsamen Mechanismus individuell und/oder separat betätigt werden, z. B. zur genauen Zentrierung des Preforms am Aufnahmedorn während des Preferential Heating-Prozesses.

## Patentansprüche

1. Rundlauf-Behälterbehandlungsmaschine (1, 2, 3, 4, 5, 6, 7, 8, 9), insbesondere Streckblasmaschine, Preform-Transportstrecke, Füller, Etikettierer, Sterilisierer, Rinser oder Transportpuffer, mit mehreren an der Behandlungsmaschine angeordneten Greifern (G), die geeignet sind zur Handhabung von zwangsweise entlang einer vorbestimmten Transportstrecke (11, 12, 13) transportierbaren Preforms (P) oder Behältern (B) beim Transport und/oder bei einer Übernahme und/oder Abgabe, wobei jeder Greifer (G) an einer mindestens zwei Greiferklauen (15, 16, 15a, 15b, 16a), die um wenigstens eine Schwenkachse (17) schwenkbar sind, lagernden Halterung (14) wenigstens einen ansteuerbaren elektrischen oder magnetischen Antrieb (18, M, S) zur schwenkenden Betätigung der Greiferklauen aufweist, die relativ zueinander in Öffnungs- und Schließrichtungen zumindest zwischen definierten Greif- und Freigabepositionen schwenkbar sind, wobei vom Antrieb (18, M, S) zumindest eine Greiferklaue (15, 16, 15a, 15b, 16a) in Öffnungs- und/oder Schließrichtung relativ zu einer anderen Greiferklaue des Greifers (G) individuell separat schwenkbar ist.

2. Rundlauf-Behälterbehandlungsmaschine nach Anspruch 1, **dadurch gekennzeichnet, dass** jede Greiferklaue (15, 16, 15a, 15b, 16a) über einen gemeinsamen oder über je einen eigenen elektrischen oder magnetischen Antrieb voneinander verschieden betätigbar und individuell separat relativ zu einer anderen Greiferklaue schwenkbar ist.

3. Rundlauf-Behälterbehandlungsmaschine nach Anspruch 1, **dadurch gekennzeichnet, dass** zwei Greiferklauen (15, 16) vorgesehen und an der Halterung (14) jeweils um eine Schwenkachse (17) schwenkend bewegbar sind.

4. Rundlauf-Behälterbehandlungsmaschine nach Anspruch 3, **dadurch gekennzeichnet, dass** die Greiferklauen (15, 16) relativ zur Halterung (14) in der gleichen Richtung jedoch relativ zueinander individuell schwenkbar sind.

5. Rundlauf-Behälterbehandlungsmaschine nach Anspruch 3, **dadurch gekennzeichnet, dass** die Greiferklauen (15, 16) unter Aufrechthalten der Greifposition in der gleichen Richtung relativ zur Halterung (14) über individuell unterschiedliche Schwenkwinkel (α1, α2) um voneinander beabstandete Schwenkachsen (17) schwenkbar sind.

6. Rundlauf-Behälterbehandlungsmaschine nach Anspruch 2, **dadurch gekennzeichnet, dass** ein jeweiliger eigener magnetischer Antrieb (M) einer Greiferklaue (15, 16) mit der Greiferklaue verbundene, gegensinnig polarisierte Permanentmagneten (20) und wenigstens eine an eine Steuerung angeschlossene Magnetspule (21) aufweist, vorzugsweise pro Greiferklaue zwei oder eine Vielzahl von Magnetspulen.

7. Rundlauf-Behälterbehandlungsmaschine nach Anspruch 2, **dadurch gekennzeichnet, dass** der Antrieb einen an eine Steuerung angeschlossenen elektrischen kraft- und/oder weg- und/oder positionsgeregelten Servomotor (S) aufweist, der entweder als Direktantrieb an der Schwenkachse (17) oder einer Welle der Greiferklaue in der Halterung (14) angreift oder über ein Zahnradgetriebe (27, 43, 44, 29) mit der Schwenkachse (17) oder der Welle (19) gekoppelt ist.

8. Rundlauf-Behälterbehandlungsmaschine nach wenigstens einem der vorhergehenden Ansprüche, **dadurch gekennzeichnet, dass** zumindest eine der Greiferklauen (15, 16) des Greifers (G) in ihrer Längsrichtung teleskopierbar ausgebildet ist und zum Teleskopieren einen elektrischen oder magnetischen Hilfsantrieb (30), vorzugsweise einen Linearantrieb, aufweist.

9. Rundlauf-Behälterbehandlungsmaschine nach Anspruch 5, **dadurch gekennzeichnet, dass** die Greiferklauen (15, 16) unter Beibehaltung der Greifposition über einen gemeinsamen, an der Halterung (14) angeordneten Servomotor (S) unter Zwischenschaltung eines Zahnrad- oder Nockengetriebes in der gleichen Richtung über die unterschiedlichen Schwenkwinkel (α1, α2) schwenkbar sind.

10. Rundlauf-Behälterbehandlungsmaschine nach wenigstens einem der Ansprüche 1 bis 9, **dadurch gekennzeichnet, dass** in einer oder der Steuerung wahlweise abrufbare unterschiedliche Haltekraftprofile und/oder unterschiedlich weite definierte Greifpositionen der Greiferklauen (15, 16, 15a, 15b, 16a) für unterschiedliche bzw. unterschiedlich große Sorten von Preforms (P) oder Behälter (B) abgespeichert sind.

11. Rundlauf-Behälterbehandlungsmaschine nach wenigstens einem der vorhergehenden Ansprüche, **dadurch gekennzeichnet, dass** zumindest der Greifer (G) mit seinen Greiferklauen (15, 16) in einem Reinraum (R) platziert ist, wobei, vorzugsweise an der Halterung (14) zwischen dem wenigstens einen Antrieb oder Servomotor und dem Greifbereich der Greiferklauen (15, 16) eine Reinraumdichtung angeordnet ist, vorzugsweise eine zwischen jeder Greiferklaue (15, 16) und der Halterung (14) an der Schwenkachse (17) oder Welle (19) der Greiferklaue (15, 16) abgestützte Dichtung (25) einer Reinraum-Begrenzungswand (23) oder eines Begrenzungswand-Faltenbalgs (63).

12. Rundlauf-Behälterbehandlungsmaschine nach wenigstens einem der vorhergehenden Ansprüche, **dadurch gekennzeichnet, dass** der Greifer (G) ein Preform-Zuführ- und - Übergabegreifer in einem Sternrad (13) einer geteilte Blasformen (50) aufweisenden Blasstation einer als Streckblasmaschine (3) ausgebildeten Behälterbehandlungsmaschine ist, und dass eine oder die Steuerung des Antriebs oder jedes eigenen Antriebs der Greiferklauen (15,16) mit wenigstens einer Sensoranordnung (53), vorzugsweise einer Kamera oder einem Näherungsinitiator, verbunden ist, mit der die Relativposition zwischen einem im Greifer (G) übergabebereiten Preform (P) und entweder dem Zentrum (ZF) und/oder den Formhälften (51, 52) der Blasform (50) und/oder einer versagensbedingt in der Blasform (50) verbliebenen Reckstange abgreifbar und zum Ansteuern des Antriebs oder jedes eigenen Antriebs der Greiferklauen entweder zwecks Umpositionierung des Preforms (P) in das Zentrum (ZF) der Blasform (50) oder zwecks Freigabe des Preforms aus dem Greifer (G) auswertbar ist.

13. Rundlauf-Behälterbehandlungsmaschine nach wenigstens einem der vorhergehenden Ansprüche, **dadurch gekennzeichnet, dass** zumindest eine Greiferklaue (15, 16) bei einer Übergabe oder Abwesenheit oder zum Aussondern und Abwerfen eines Preforms (P) bei oder vor Erreichen eines jeweiligen Übergabepunktes routinemäßig oder aufgrund eines einen Bedarf anzeigenden Sensorsignals oder einer Steuerungsroutine individuell in Öffnungsrichtung schwenkbar ist.

14. Rundlauf-Behälterbehandlungsmaschine nach wenigstens einem der Ansprüche 1 bis 13, **dadurch gekennzeichnet, dass** in einem Übergabebereich von einer Transportstrecke zu einer anderen die Greiferklauen (15, 16) von an beiden Transportstrecken vorgesehenen Greifern (G) in einer gemeinsamen Laufebene (E1) angeordnet sind, und dass bei einer Übergabe eines insbesondere am Mundstück im Bereich eines Gewindes und Sicherungsringes transportierenden Preforms (P) oder Behälters (B) die Greiferklauen jedes Greifers über eine oder die Steuerung in und/oder gegen die Transportrichtung individuell gemeinsam und/oder einzeln relativ zu den Halterungen (14) schwenkbar sind.

15. Rundlauf-Behälterbehandlungsmaschine nach wenigstens einem der Ansprüche 1 bis 13, **dadurch gekennzeichnet, dass** in einer Station einer als Sterilisierer oder Rinser ausgebildeten Behälterbehandlungsmaschine wenigstens eine Sterilisier- oder Rinsmittel-Einlassdüse (58) zum Sterilisieren oder Rinsen eines ein Mundstück (60) mit einem Öffnungsrand (62) aufweisenden Preforms (P) oder Behälters (B) vorgesehen ist, und dass der Greifer (G) unter Ausrichten des Mundstückes (60) in Bezug auf die Einlassdüse unter Beibehaltung der Greifposition derart schwenkbar ist, dass die Position des Öffnungsrandes (62) des Mundstückes (60) relativ zur Einlassdüse (58) veränderbar ist.

16. Verfahren zur Abgabe eines Preforms (P) in eine geteilte Blasform (50) einer als Streckblasmaschine ausgebildeten Rundlauf-Behälterbehandlungsmaschine (3) nach wenigstens einem der Ansprüche 1-15, mit mindestens zwei an einer Halterung eines Greifers (G) in Öffnungs- und Schließrichtungen zumindest zwischen definierten Greif- und Freigabepositionen schwenkbaren Greiferklauen (15, 16), wobei:
bei noch geöffneter Blasform (50) wird vor der Abgabe die Relativposition zwischen dem Blasformzentrum (ZF) oder den Blasformhälften (51, 52) und dem Zentrum (Z) des in der Greifposition des Greifers (G) gehaltenen Preforms (P) über wenigstens einen Erkennungssensor ermittelt und hinsichtlich eines Versatzes (x1-x2) zumindest in oder gegen die gemeinsame Transportrichtung des Greifers und der Blasform ausgewertet, bei Feststellen einer Abweichung werden zumindest die Greiferklauen (15, 16) gemeinsam unter Aufrechthalten der Greifposition relativ zur Halterung (14) bis zur zumindest weitgehenden Kompensation der Abweichung geschwenkt, ehe die Abgabe mit Schließen der Blasform (50) vollzogen wird.

17. Verfahren zum zyklischen Sterilisieren oder Rinsen eines in einem zumindest zwei schwenkbare Greiferklauen (15, 16) aufweisenden Greifer (G) an einem Mundstück (60) transportierten Preforms (P) oder Behälters (B) in einer Station einer als Sterilisierer oder Rinser ausgebildeten Rundlauf-Behälterbehandlungsmaschine nach wenigstens einem der Ansprüche 1-15, wobei der Greifer (G) an einer die Greiferklauen schwenkbar lagernden Halterung (14) wenigstens einen an eine Steuerung angeschlossenen Antrieb für die Schwenkbetätigung der Greiferklauen aufweist, und zum Einbringen eines Sterilisier- oder Rinsmittels unter Druck wenigstens eine Einlassdüse (58) vorgesehen ist, auf die der Greifer (G) das Mundstück (60) ausrichtet, wobei während eines Zyklus zur Intensivierung der Sterilisier- oder Rinswirkung durch individuelles Schwenken der Greiferklauen (15, 16) über den wenigstens einen elektrisch oder magnetisch ausgebildeten Antrieb unter Beibehalt der Greifposition die Position des Mundstücks (60) relativ zur Einlassdüse (58) und quer zur Austrittsrichtung des Sterilisier- oder Rinsmittels aus der Einlassdüse mindestens einmal verändert wird.

18. Verfahren zur Übernahme eines Preforms (P) von einem im Preform-Mundstück angreifenden Aufnahmedorn (D) oder Innengreifer durch mindestens zwei am Preform (P) außen angreifenden Greiferklauen (15, 16) eines Greifers (G) in einer zu einem Blasmodul einer als Streckblasmaschine (3) ausgebildeten Rundlauf-Behälterbehandlungsmaschine, die nach wenigstens einem der Ansprüche 1-15 ausgebildet ist, führenden Transportstrecke, wobei die Greiferklauen an einer Halterung (14) in Öffnungs- und Schließrichtungen zumindest zwischen Greif- und Freigabepositionen durch einen ansteuerbaren Antrieb geschwenkt werden, wobei durch einen Sensor und/oder eine Steuerung die Abwesenheit eines Preforms (P) auf dem Aufnahmedorn (D) oder Innengreifer verifiziert wird, und dass aufgrund der verifizierten Abwesenheit des Preforms (P) die Greiferklauen (15, 16) des, vorzugsweise von einem zu übernehmenden Preform (P) zu öffnenden, Greifers (G) über wenigstens einen an der Halterung (14) angeordneten, elektrischen oder magnetischen Antrieb (18, S, M), wie einen regelbaren Servomotor (S), durch routinemäßiges oder bedarfsweises Ansteuern des Antriebs individuell entweder aus der Freigabeposition nur in eine für den Aufnahmedorn (D) oder Innengreifer kollisionssichere, definierte Preform-Greifposition oder aus dieser Preform-Greifposition wieder in die Freigabeposition geschwenkt werden.

## Claims

1. Rotary container treatment machine (1, 2, 3, 4, 5, 6, 7, 8, 9), particularly stretch blow molding machine, preform-transport section, filler, labeler, sterilizer, rinser or transport buffer section, comprising grippers (G) arranged at the treatment machine which grippers are adapted to handle preforms (S) or containers (B) during their transport and/or take-over and/or hand-out while being compulsorily transported along a predetermined transport section (11) wherein each gripper (G) has at least two gripper claws (15, 16, 15a, 15b, 16a) swivable about at least one swivel axis (17) on a holder (14), the holder (14) comprising at least one activatable electric or magnetic drive (18, M, S) for swivably actuating the gripper claws, the gripper claws being swivable relative to each other in opening and closing directions at least between defined gripping and release positions, wherein at least one gripper claw (15, 16, 15a, 15b, 16a) can be individually separately swiveled in the opening and/or closing direction relative to another gripper claw of the gripper (G) by the drive (18, M, S).

2. Rotary container treatment machine according to claim 1, **characterized in that** each gripper claw (15, 16, 15a, 15b, 16a) can be actuated different from another and swiveled relative to another gripper claw by a common or by a separate electric or magnetic drive.

3. Rotary container treatment machine according to claim 1, **characterized in that** two gripper claws (15, 16) are provided and can be moved to swivel at the holder (14) about a respective swivel axis (17).

4. Rotary container treatment machine according to claim 3, **characterized in that** the gripper claws (15, 16) are swivable in the same direction but individually relative to each other.

5. Rotary container treatment machine according to claim 3, **characterized in that** the gripper claws (15, 16) are swivable in the same direction relative to the holder (14) over individually different swivel angles (α1, α2), and about spaced apart swivel axes (17), while maintaining the gripping position.

6. Rotary container treatment machine according to claim 2, **characterized in that** a respective separate magnetic drive (M) of a gripper claw (15, 16) comprises inversely polarized permanent magnets (20) connected with the gripper claw (15, 16), and at least one magnet coil (21) connected to a control, preferably two or a plurality of magnet coils per gripper claw.

7. Rotary container treatment machine according to claim 2, **characterized in that** the drive comprises a force- and/or path- and/or position-controlled servomotor (S) connected to a control, the servomotor either engaging as a direct drive at the swivel axis (17) or a shaft of the gripper claw (15, 16) in the holder (14), or is coupled to the swivel axis (17) or the shaft (19) via a toothed gearing (27, 43, 44, 29).

8. Rotary container treatment machine according to at least one of the preceding claims, **characterized in that** at least one of the gripper claws (15, 16) is embodied to be telescopic in its longitudinal direction and comprises for telescoping an electric or magnetic accessory drive (30), preferably a linear drive.

9. Rotary container treatment machine according to claim 5, **characterized in that** the gripper claws (15, 16) can be swiveled by a common servomotor (S) arranged at the holder (14), and via a toothed or cam gear in-between in the same direction over the different swivel angles (α1, α2), while maintaining the gripping position,.

10. Rotary container treatment machine according to at least one of claims 1 to 9, **characterized in that** in a or the control (S) selectively retrievable different holding force profiles, and/or differently wide defined gripping positions of the gripper claws (15, 16, 15a, 15b, 16a) for different or differently dimensioned sorts of preforms (P) or containers (B) are stored.

11. Rotary container treatment machine according to at least one of the preceding claims, **characterized in that** at least the gripper (G) with its gripper claws (15, 16) is placed in a clean room (R), wherein a clean room seal is arranged preferably at the holder (14) between the at least one drive, or servomotor and the gripping region of the gripper claws (15, 16), preferably a seal (25) of a clean room boundary wall (23) or of a boundary wall bellow (63) supported between each gripper claw (15, 16) and the holder (14) at the swivel axis (17) or the shaft (19) of the gripper claw (15, 16).

12. Rotary container treatment machine according to at least one of the preceding claims, **characterized in that** the gripper (G) is a preform supply and delivery gripper in a starwheel (13) of a blow molding station comprising split blow molds (50) of a container treatment machine embodied as a stretch-blow molding machine (3), and that a or the control of the common or of each separate drive of the gripper claws (15, 16) is connected with at least one sensor array (53), preferably a camera or a proximity initiator, by means of which a relative position between a preform (P) ready to be transferred by the gripper (G) and either a center (ZF) and/or mold halves (51, 52) of the blow mold (50), and/or a stretching rod that remained in the blow mold (50) due to an operation failure, can be measured and evaluated for activating the drive or each separate drive either to reposition the preform (P) to the center (ZF) of the blow mold (50), or to release the preform from the gripper (G).

13. Rotary container treatment machine according to at least one of the preceding claims, **characterized in that** at least one gripper claw (15, 16) can be individually swiveled in the opening direction in case of a transfer or in absence of or for sorting out and or ejecting a preform (P), when or before a respective transfer point is reached, by routine or on the basis of a sensor signal indicating a demand, or on the basis of a control routine.

14. Rotary container treatment machine at least according to one of claims 1 to 13, **characterized in that** in a transfer region from one transport section to another one, the gripper claws (15, 16) of grippers (G) provided at both transport sections are arranged in a common running level (E1), and that during transfer of a preform (P) or container (B), in particular transported at the mouth piece in the region of a thread and of a securing ring, the gripper claws of each gripper (G) can be swiveled via a or the control in and/or opposite to the direction of transport individually together and/or individually separately relative to the holders (14).

15. Rotary container treatment machine according to at least one of claims 1 to 13, **characterized in that** in a station of a container treatment machine embodied as a sterilizer or rinser, at least one sterilizing or rinsing agent inlet nozzle (58) for sterilizing or rinsing a preform (P) or container (B) comprising a mouth piece (60) with an opening rim (62) is provided, and that the gripper (G) can be swiveled, while aligning the mouth piece (60) with respect to the inlet nozzle (58) and maintaining the gripping position, such that the position of the opening rim (62) of the mouth piece (60) is changed relative to the inlet nozzle (58).

16. Method of transferring a preform (P) into a split blow mold (50) of a rotary container treatment machine (3) embodied as a stretch-blow molding machine according to at least one of claims 1 to 15, by use of a gripper (G) which comprises at least two gripper claws (15, 16) swivable at a holder in opening and closing directions at least between defined gripping and release positions, wherein:
while the blow mold (50) is still opened before the transfer the relative position between the blow mold center (ZF) or the blow mold halves (51, 52) and a center (Z) of the preform (P) held in the gripping position of the gripper (G) is detected by at least one detection sensor and is evaluated in view of a misalignment (x1-x2) at least in or opposite to the common direction of transport of the gripper and the blow mold,
if a misalignment is detected, at least the gripper claws (15, 16) are commonly swiveled, while maintaining the gripping position, relative to the holder (14) until at least a major compensation of the misalignment is achieved before the transfer is completed by closing the blow mold (50).

17. Method of cyclically sterilizing or rinsing a preform (P) or container (B) transported at a mouth piece (60) in a gripper (G) comprising at least two swivable gripper claws (15, 16) in a station of a rotary container treatment machine embodied as a sterilizer or rinser according to at least one of claims 1 to 15, wherein the gripper (G) comprises, at a holder (14) swivably supporting the gripper claws, at least one drive connected to a control for swivably actuating the gripper claws, and at least one inlet nozzle (58) for supplying a sterilizing or rinsing agent under pressure, to which nozzle the gripper (G) orients the mouth piece (60), wherein during a cycle, for intensifying the sterilizing or rinsing effect by individually swiveling the gripper claws (15, 16) by the at least one electric or magnetic drive while maintaining the gripping position, the position of the mouth piece (60) is changed at least once relative to the inlet nozzle (58) and transverse to the exiting direction of the sterilizing or rinsing agent from the inlet nozzle.

18. Method of taking-over a preform (P) from a holding arbor (D) or internal gripper engaging in the preform mouth piece (60) by at least two gripper claws (15, 16) of a gripper (G) acting from the outside at the preform (P) in a transport section leading to a blow molding module of a rotary container treatment machine embodied as a stretch-blow molding machine (3), according to at least one of claims 1 to 15, wherein the gripper claws are swiveled at a holder (14) in opening and closing directions at least between gripping and release positions by a controllable drive, wherein the absence of a preform (P) on the holding arbor (D) or internal gripper is verified by a sensor and/or a control, and that on the basis of the verified absence of the preform (P), the gripper claws (15, 16) of the gripper (G), which preferably is to be opened by a preform (P) to be taken-over, are swiveled by at least one electric or magnetic drive (18, S, M) arranged at the holder (14), such as a controllable servomotor (S), by routine control of the drive or upon demand individually either from the release position only to a defined preform gripping position which is collision-safe for the holding arbor (D) or the internal gripper, or are swiveled from this defined preform gripping position again back to the release position.

## Revendications

1. Machine de traitement de contenants rotative (1, 2, 3, 4, 45, 6, 7, 8, 9), notamment machine d'étirage-soufflage, remplisseur, étiqueteuse, stérilisateur, rinceuse ou tampon-accumulateur de transport, comprenant plusieurs préhenseurs (G) agencés sur la machine de traitement, qui sont adaptés à la manipulation de préformes (P) ou de contenants (B) pouvant être transportés de manière forcée le long d'un parcours de transport prédéterminé (11, 12, 13), pendant le transport et/ou lors d'une prise en charge et/ou d'une délivrance, machine
dans laquelle chaque préhenseur (G) présente, sur un support (14) assurant le montage d'au moins deux mors de préhenseur (15, 16, 15a, 15b, 16a), qui peuvent pivoter autour d'au moins un axe de pivotement (17), au moins un entraînement électrique ou magnétique (18, M, S) pouvant être commandé pour l'actionnement de pivotement des mors de préhenseur, qui peuvent pivoter l'un par rapport à l'autre dans des directions d'ouverture et de fermeture, au moins entre des positions de préhension et de dégagement définies, et
dans laquelle l'entraînement (18, M, S) peut produire le pivotement individuel séparé d'au moins un mors de préhenseur (15, 16, 15a, 15b, 16a) dans la direction d'ouverture et/ou de fermeture, par rapport à un autre mors de préhenseur du préhenseur (G).

2. Machine de traitement de contenants rotative selon la revendication 1, **caractérisée en ce que** chaque mors de préhenseur (15, 16, 15a, 15b, 16a) peut être actionné respectivement de manière différente et peut pivoter individuellement de manière séparée par rapport à un autre mors de préhenseur, par l'intermédiaire d'un entraînement électrique ou magnétique commun ou propre à chacun d'entre eux.

3. Machine de traitement de contenants rotative selon la revendication 1, **caractérisée en ce que** sont prévus deux mors de préhenseur (15, 16), qui sont mobiles par pivotement sur le support (14), respectivement autour d'un axe de pivotement (17).

4. Machine de traitement de contenants rotative selon la revendication 3, **caractérisée en ce que** les mors de préhenseur (15, 16) peuvent pivoter dans la même direction par rapport au support (14), toutefois de manière individuelle l'un par rapport à l'autre.

5. Machine de traitement de contenants rotative selon la revendication 3, **caractérisée en ce que** les mors de préhenseur (15, 16) peuvent, tout en conservant la position de préhension, pivoter autour d'axes de pivotement (17) mutuellement espacés, dans la même direction par rapport au support (14), selon des angles de pivotement individuels (α1, α2) différents.

6. Machine de traitement de contenants rotative selon la revendication 2, **caractérisée en ce qu'**un entraînement magnétique (M) respectif propre à un mors de préhenseur (15, 16) comprend des aimants permanents (20) polarisés en opposition et reliés au mors de préhenseur, et au moins une bobine magnétique (21) raccordée à une commande, de préférence deux ou une pluralité de bobines magnétiques par mors de préhenseur.

7. Machine de traitement de contenants rotative selon la revendication 2, **caractérisée en ce que** l'entraînement présente un servomoteur électrique (S) régulé en force, et/ou en déplacement et/ou en position, raccordé à une commande, et qui, soit agit, en tant qu'entraînement direct, sur l'axe de pivotement (17) ou un arbre du mors de préhenseur dans le support (14), soit est couplé par l'intermédiaire d'une transmission à roues dentées (27, 43, 44, 29), à l'axe de pivotement (17) ou à l'arbre (19).

8. Machine de traitement de contenants rotative selon l'une au moins des revendications précédentes, **caractérisée en ce qu'**au moins l'un des mors de préhenseur (15, 16) du préhenseur (G) est d'une configuration télescopique dans sa direction longitudinale, et comporte un entraînement auxiliaire (30) électrique ou magnétique, de préférence un entraînement linéaire, pour assurer le mouvement télescopique.

9. Machine de traitement de contenants rotative selon la revendication 5, **caractérisée en ce que** les mors de préhenseur (15, 16), tout en conservant leur position de préhension, peuvent pivoter dans la même direction selon les angles de pivotement (α1, α2) différents, par l'intermédiaire d'un servomoteur (S) commun, agencé sur le support (14), avec interposition d'une transmission à roues dentées ou à cames.

10. Machine de traitement de contenants rotative selon l'une au moins des revendications précédentes, **caractérisée en ce que** dans une ou dans la commande sont mémorisés différents profils de maintien et/ou des positions de préhension définies, de différente largeur, des mors de préhenseur (15, 16, 15a, 15b, 16a), qui peuvent être appelés au choix, pour des sortes de préformes (P) ou de contenants (B) différentes ou de grandeur différente.

11. Machine de traitement de contenants rotative selon l'une au moins des revendications précédentes, **caractérisée en ce qu'**au moins le préhenseur (G) avec ses mors de préhenseur (15, 16) est placé dans un espace stérile (R), et **en ce que** de préférence sur le support (14) est agencé entre ledit au moins un entraînement ou servomoteur et la zone de préhension des mors de préhenseur (15, 16), un joint d'étanchéité d'espace stérile, de préférence un joint d'étanchéité (25) d'une paroi de délimitation (23) de chambre stérile ou d'un soufflet de paroi de délimitation (63), s'appuyant entre chaque mors de préhenseur (15, 16) et le support (14), sur l'axe de pivotement (17) ou l'arbre (19) du mors de préhenseur (15, 16).

12. Machine de traitement de contenants rotative selon l'une au moins des revendications précédentes, **caractérisée en ce que** le préhenseur (G) est un préhenseur d'alimentation et de transfert de préforme dans une roue en étoile (13) d'un poste de soufflage comprenant des moules de soufflage divisés (50), d'une machine de traitement de contenants se présentant en tant que machine d'étirage-soufflage (3), et **en ce qu'**une ou la commande de l'entraînement ou de chaque entraînement propre des mors de préhenseur (15, 16) est reliée à au moins un agencement de capteurs (53), de préférence une caméra ou un détecteur de proximité, à l'aide duquel peut être relevée la position relative entre une préforme (P) prête au transfert dans le préhenseur (G) et le centre (ZF) et/ou les moitiés de moule de formage (51, 52) du moule de soufflage (50) et/ou d'une tige d'étirage restée de manière défectueuse dans le moule de soufflage (50), cette position pouvant être exploitée pour commander l'entraînement ou chaque entraînement propre des mors de préhenseur, en vue d'un changement de positionnement de la préforme (P) vers le centre (ZF) du moule de soufflage (50), ou bien en vue de dégager et libérer la préforme du préhenseur (G).

13. Machine de traitement de contenants rotative selon l'une au moins des revendications précédentes, **caractérisée en ce qu'**au moins un mors de préhenseur (15, 16) peut pivoter individuellement dans la direction d'ouverture lors d'un transfert ou en cas d'absence ou bien pour retirer et éjecter une préforme (P) en atteignant ou avant d'atteindre un point de transfert respectif, conformément à une routine ou bien en raison d'un signal de capteur indiquant un besoin ou en raison d'une routine de commande.

14. Machine de traitement de contenants rotative selon l'une au moins des revendications 1 à 13, **caractérisée en ce que** dans une zone de transfert d'un parcours de transport à un autre, les mors de préhenseur (15, 16) de préhenseurs (G) prévus sur les deux parcours de transport, sont agencés dans un plan de circulation (E1) commun, et **en ce que** lors d'un transfert d'une préforme (P) ou d'un contenant (B) transporté notamment au niveau d'une partie d'embouchure dans la zone d'un filetage et d'un anneau d'arrêt, les mors de préhenseur de chaque préhenseur peuvent pivoter dans et/ou à l'encontre de la direction de transport, individuellement en commun et/ou individuellement par rapport au supports (14), sous l'effet d'une ou de la commande.

15. Machine de traitement de contenants rotative selon l'une au moins des revendications 1 à 13, **caractérisée en ce que** dans un poste d'une machine de traitement de contenants réalisée sous forme de stérilisateur ou de rinceuse, est prévue au moins une buse d'entrée d'agent stérilisant ou de rinçage (58) pour stériliser ou rincer une préforme (P) ou un contenant (B) présentant une partie d'embouchure (60) avec un bord d'ouverture (62), et **en ce que** le préhenseur (G) peut, en vue d'orienter la partie d'embouchure (60) par rapport à la buse d'entrée, pivoter, tout en conservant la position de préhension, de manière telle que la position du bord d'ouverture (62) de la partie d'embouchure (60) puisse être modifiée par rapport à la buse d'entrée (58).

16. Procédé pour délivrer une préforme (P) dans un moule de soufflage divisé (50) d'une machine de traitement de contenants rotative (3) selon l'une au moins des revendications 1 - 15, se présentant sous la forme d'une machine d'étirage-soufflage, comprenant au moins deux mors de préhenseur (15, 16) susceptibles de pivoter sur un support d'un préhenseur (G), dans des directions d'ouverture et de fermeture, au moins entre des positions définies de préhension et de dégagement, procédé d'après lequel pour un moule de soufflage (50) encore ouvert, on détermine avant le transfert, la position relative entre le centre de moule de soufflage (ZF) ou les moitiés de moule de soufflage (51, 52) et le centre (Z) de la préforme (P) maintenue dans la position de préhension du préhenseur (G), par l'intermédiaire d'un capteur de détection, et on l'exploite quant à un décalage (x1-x2) au moins dans ou à l'encontre de la direction de transport commune du préhenseur et du moule de soufflage, et dans le cas d'une constatation d'un écart, on fait pivoter au moins les mors de préhenseur (15, 16) de manière commune par rapport au support (14), en conservant la position de préhension, jusqu'à une compensation sensiblement complète de l'écart, avant d'achever le transfert avec la fermeture du moule de soufflage (50).

17. Procédé pour stériliser ou rincer de manière cyclique une préforme (P) ou un contenant (B) transporté au niveau d'une partie d'embouchure (60) dans un préhenseur (G) comportant au moins deux mors de préhenseur (15, 16) pivotants, dans un poste d'une machine de traitement de contenants rotative selon l'une au moins des revendications 1-15, se présentant sous la forme d'un stérilisateur ou d'une rinceuse, le préhenseur (G) comportant, sur un support (14) qui porte de manière pivotante les mors de préhenseur, au moins un entraînement raccordé à une commande pour l'actionnement de pivotement des mors de préhenseur, et au moins une buse d'entrée (58) étant prévue pour l'introduction sous pression d'un agent de stérilisation ou de rinçage, et vers laquelle le préhenseur (G) oriente la partie d'embouchure (60), procédé d'après lequel, pendant un cycle, en vue d'intensifier l'action de stérilisation ou de rinçage, la position de la partie d'embouchure (60) par rapport à la buse d'entrée (58) et transversalement à la direction de sortie de l'agent de stérilisation ou de rinçage de la buse d'entrée, est modifiée au moins une fois par pivotement individuel des mors de préhenseur (15, 16) à l'aide dudit au moins un entraînement de configuration électrique ou magnétique, tout en conservant la position de préhension.

18. Procédé destiné à reprendre une préforme (P) à partir d'un mandrin de réception (D) ou d'un préhenseur intérieur agissant au niveau d'une partie d'embouchure de préforme, par au moins deux mors de préhenseur (15, 16) d'un préhenseur (G) agissant sur l'extérieur de la préforme (P), dans un parcours de transport menant à un module de soufflage d'une machine de traitement de contenants rotative se présentant sous la forme d'une machine d'étirage-soufflage (3), qui est d'une configuration selon l'une au moins des revendications 1-15, procédé d'après lequel on fait pivoter les mors de préhenseur sur un support (14) dans des directions d'ouverture et de fermeture, au moins entre des positions de préhension et de dégagement, à l'aide d'un entraînement pouvant être commandé, et d'après lequel on vérifie par un capteur et/ou une commande l'absence d'une préforme (P) sur le mandrin de réception (D) ou le préhenseur intérieur, et sur la base de l'absence vérifiée de la préforme (P), on fait pivoter les mors de préhenseur (15, 16) d'un préhenseur (G), de préférence à ouvrir par une préforme (P) à reprendre, par l'intermédiaire d'au moins un entraînement électrique ou magnétique (18, S, M) agencé sur le support (14), comme par exemple un servomoteur (S) pouvant être régulé, par commande de l'entraînement conformément à une routine ou en fonction des besoins, individuellement à partir de la position de dégagement uniquement vers une position de préhension de préforme définie, exempte de collision pour le mandrin de réception (D) ou le préhenseur intérieur, ou bien à partir cette position de préhension de préforme à nouveau vers la position de dégagement.
